# EUROPEAN PATENT APPLICATION

(11) **EP 4 734 576 A1**
(43) Date of publication of application: **29.04.2026**
(21) Application number: 25209990.8
(22) Date of filing: 21.10.2025
(51) Int. Cl.: H04W 12/06, H04W 12/069, H04W 12/73, H04W 12/77

(54) **COMMUNICATION APPARATUS AND CONTROL METHOD THEREFOR, INFORMATION PROCESSING APPARATUS AND CONTROL METHOD THEREFOR, AND SYSTEM AND CONTROL METHOD THEREFOR**

(30) Priority: 25.10.2024 JP 2024188546
(71) Applicant: Canon Kabushiki Kaisha, Tokyo, 146-8501 (JP)
(72) Inventor: FUKUSHIMA, Kentaro, Tokyo (JP); TSUCHIYA, Keigo, Tokyo (JP)
(74) Representative: WESER & Kollegen Patentanwälte PartmbB

(57) **Abstract**

A communication apparatus (100) is provided. The apparatus (100) has a communicator to perform direct communication complying with a Wi-Fi Direct standard with an external apparatus without intervention of an access point; and a display controller to display, so as to be shot at once, a display target from which both first connection information and second connection information can be extracted. The first connection information is for performing connection of the direct communication to the communication apparatus by a first method, includes an SSID and a password of the communication apparatus, and is included in a first key group assigned with a first identifier. The second connection information is for performing connection of the direct communication to the communication apparatus by a second method different from the first method, and is included in a second key group assigned with a second identifier.

## Description

### TECHNICAL FIELD

A technique according to the present disclosure relates to a communication apparatus and a control method therefor, an information processing apparatus and a control method therefor, and a system and a control method therefor.

### TECHNICAL FIELD

In recent years, along with an increase in amount of communicated data, communication techniques such as wireless Local Area Network (LAN) have been developed. As a major communication standard of the wireless LAN, the Institute of Electrical and Electronics Engineers (IEEE) 802.11 standard series is known. The IEEE 802.11 standard series includes IEEE 802.11a/b/g/n/ac/ax standards. For example, in the latest IEEE 802.11ax standard, a technique for not only implementing high peak throughput of 9.6 gigabits per sec (Gbps) at maximum but also improving the communication rate under congestion by using Orthogonal Frequency-Division Multiple Access (OFDMA) is standardized. Note that OFDMA is an abbreviation for Orthogonal Frequency-Division Multiple Access.

On the other hand, the Wi-Fi Alliance has formulated a program for authenticating a wireless LAN device. For example, the WFD standard that defines a procedure of establishing a communication link between wireless LAN stations (STAs) by exchanging communication parameters between the STAs without intervention of an access point (AP) has been formulated. WFD is an abbreviation for Wi-Fi Direct^{®}.

The Wi-Fi Aware standard as a standard for searching for a service provided by an apparatus has also been formulated. Japanese Patent Laid-Open No. 2019-201427 describes a technique for detecting a communication terminal using the Wi-Fi Aware standard.

In addition, there is known a method of performing wireless connection using a two-dimensional code (QR code^{®}) at the time of direct connection by Wi-Fi Direct or the like. Japanese Patent Laid-Open No. 2017-175444 proposes a method of establishing wireless direct connection by displaying, on a printer, a QR code generated from communication parameters necessary for wireless direct connection and reading it by a mobile terminal.

### SUMMARY

In a WFD R2 method as a new method of Wi-Fi Direct^{®}, a QR code is designated for bootstrapping, thereby enabling parameter exchange. However, for the user of an opposite terminal such as a smartphone that does not support the WFD R2 method, it is inconvenient not to be able to implement the conventional wireless direct connection standard (legacy method) using a QR code because it is impossible to use the WFD R2 method.

In consideration of the above-described problem, the present disclosure provides a mechanism for making it possible to preferably use a plurality of Wi-Fi Direct standards.

The present disclosure in its first aspect provides a communication apparatus as specified in claim 1. Optional features are specified in claims 2 to 8.

The present disclosure in its second aspect provides a communication apparatus as specified in claim 9. Optional features are specified in claims 10 to 13.

The present disclosure in its third aspect provides an information processing apparatus as specified in claim 14. Optional features are specified in claims 15 to 19.

The present disclosure in its fourth aspect provides a system as specified in claim 20.

The present disclosure in its fifth aspect provides a control method for a communication apparatus as specified in claim 21.

The present disclosure in its sixth aspect provides a control method for a communication apparatus as specified in claim 22.

The present disclosure in its seventh aspect provides a control method for an information processing apparatus as specified in claim 23.

The present disclosure in its eighth aspect provides a control method for a system as specified in claim 24.

With the above configuration, it is possible to preferably use a plurality of Wi-Fi Direct standards.

Features of the present disclosure will become apparent from the following description of embodiments with reference to the attached drawings. The following description of embodiments is described by way of example.

### BRIEF DESCRIPTION OF THE DRAWINGS

Fig. 1 is a view showing an example of a system configuration;
Figs. 2A and 2B are a view and a block diagram showing the arrangement of an MFP;
Figs. 3A to 3C are views each showing a display example on the operation display unit of the MFP;
Figs. 4A and 4B are a view and a block diagram showing the arrangement of a mobile terminal apparatus;
Fig. 5 is a block diagram showing the arrangement of an access point;
Fig. 6 is a sequence chart for explaining connection processing of the conventional WFD standard;
Fig. 7 is a sequence chart for explaining connection processing of a new WFD standard;
Figs. 8A-1 and 8A-2 show a flowchart illustrating display of a two-dimensional code by the MFP and connection processing to a terminal according to an embodiment;

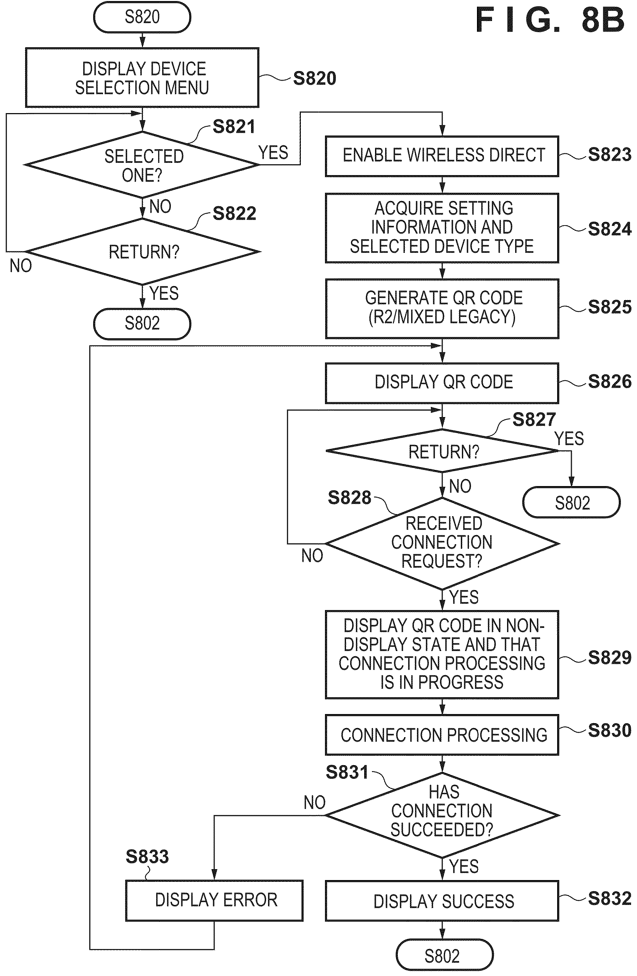

Fig. 8B is a flowchart illustrating the display of the two-dimensional code by the MFP and the connection processing to the terminal according to the embodiment;

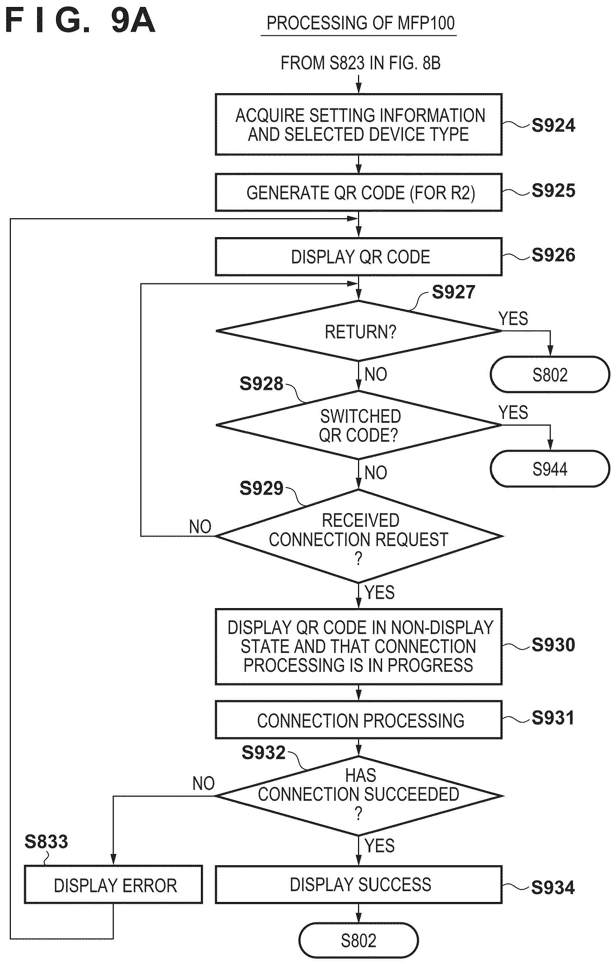

Fig. 9A is a flowchart illustrating display of a two-dimensional code by the MFP and connection processing to the terminal according to a modification of the embodiment;

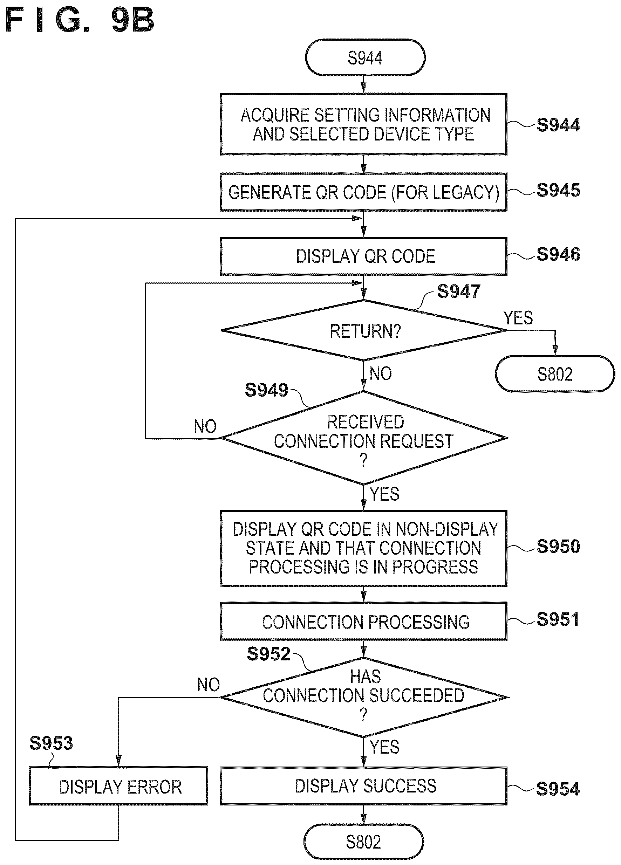

Fig. 9B is a flowchart illustrating the display of the two-dimensional code by the MFP and the connection processing to the terminal according to the modification of the embodiment;

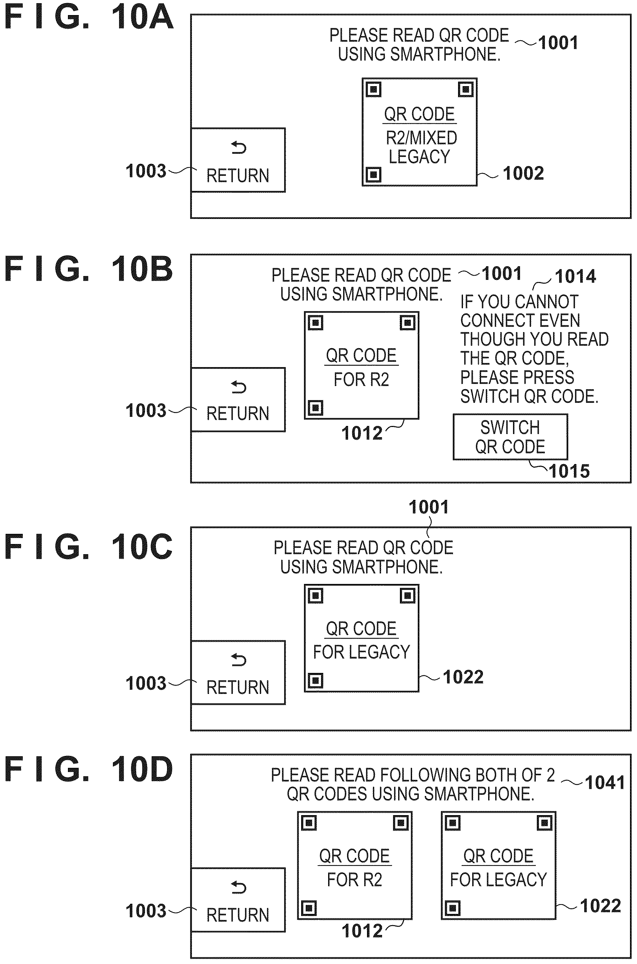

Figs. 10A to 10D are views each showing a display example of the two-dimensional code according to the embodiment;

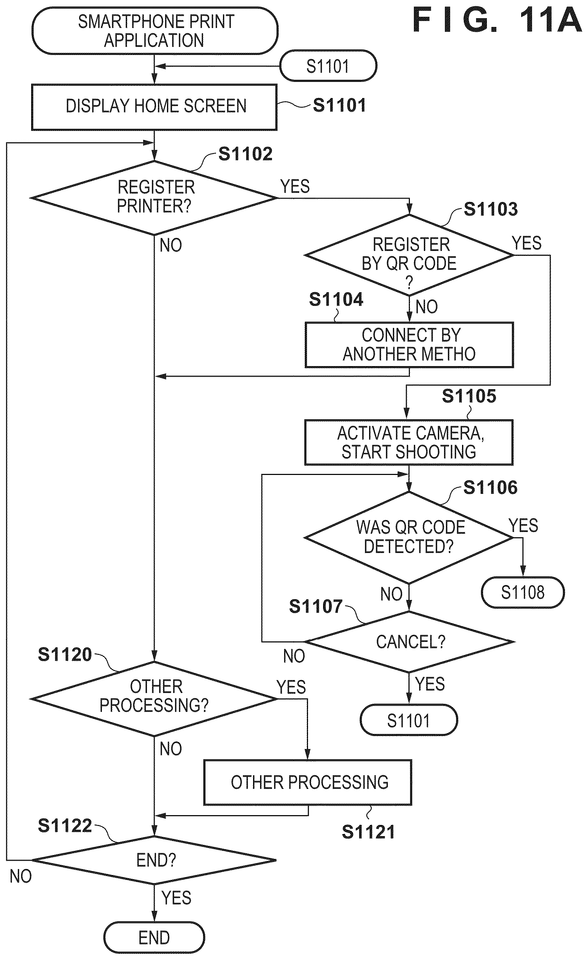

Fig. 11A is a flowchart illustrating processing of print application software in the mobile terminal apparatus;

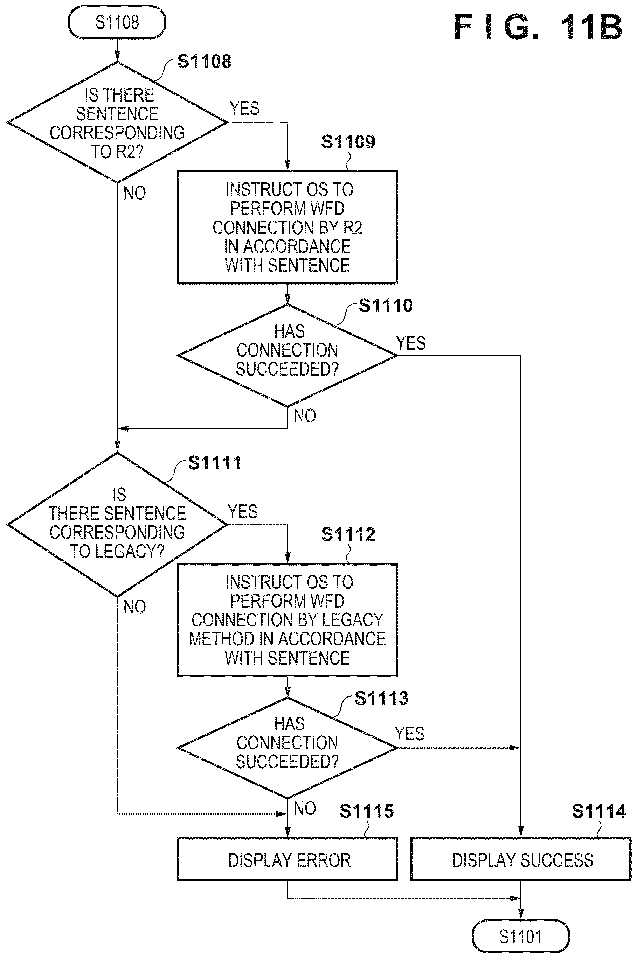

Fig. 11B is a flowchart illustrating the processing of the print application software in the mobile terminal apparatus;

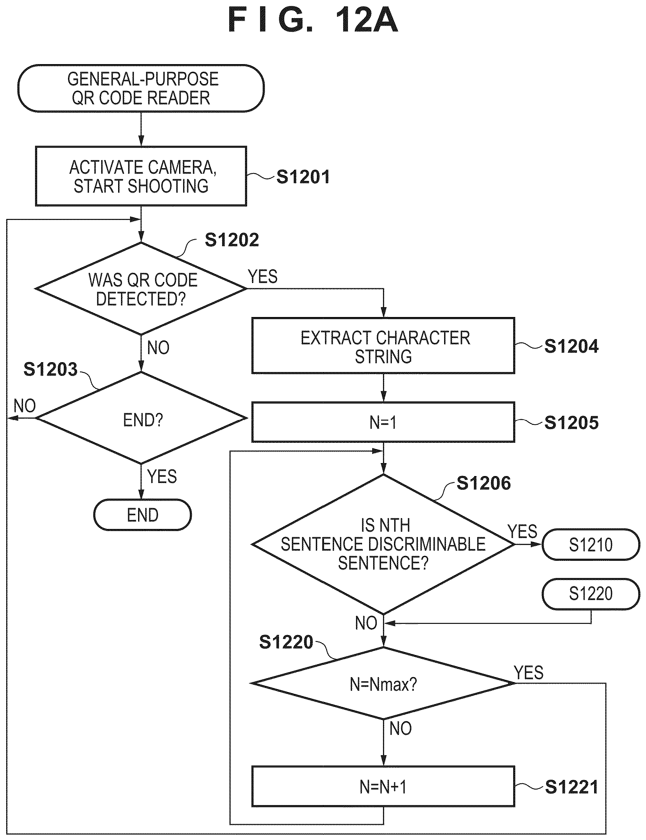

Fig. 12A is a flowchart illustrating processing of application software of a general-purpose QR code reader in the mobile terminal apparatus; and

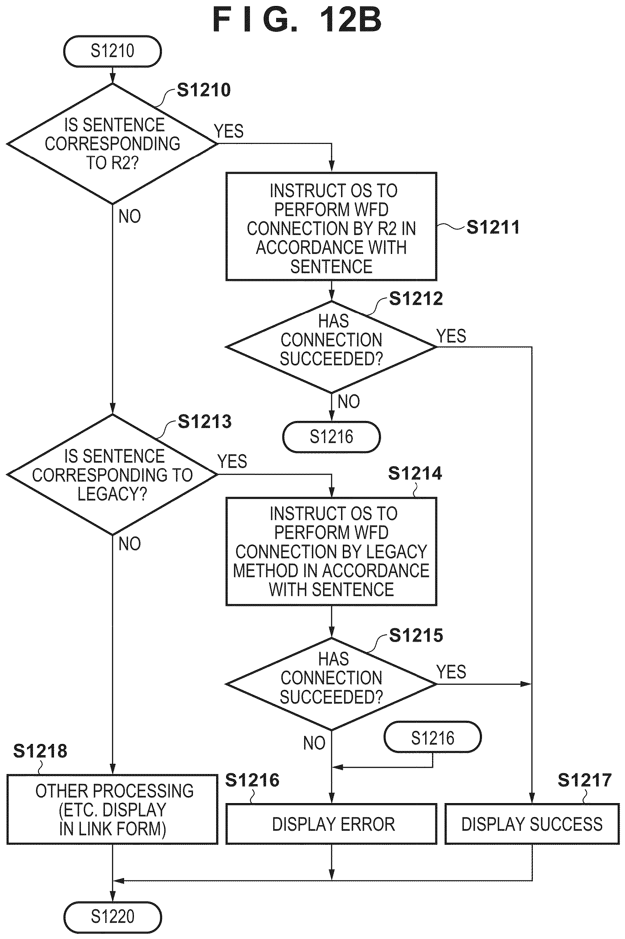

Fig. 12B is a flowchart illustrating the processing of the application software of the general-purpose QR code reader in the mobile terminal apparatus.

### DESCRIPTION OF THE EMBODIMENTS

Embodiments of the present disclosure will be described in detail below with reference to the accompanying drawings. Note that the embodiments are merely examples, and practical examples such as components, processing steps, and display screens are not intended to limit the scope of the present disclosure, unless otherwise specified.

When connecting an opposite terminal and a communication apparatus (for example, a printer) by a legacy method, the opposite terminal is connected to the communication apparatus by wireless infrastructure connection. In other words, since the opposite terminal is connected to the communication apparatus by handling the communication apparatus as an access point, the opposite terminal disconnects connection from another access point. Therefore, even if the opposite terminal has been connected to an external access point, the connection between the opposite terminal and the external access point is temporarily disconnected. Then, even though the opposite terminal can communicate with the communication apparatus, the opposite terminal cannot communicate with the Internet via the external access point. That is, for example, even though the opposite terminal can receive and acquire, from the communication apparatus, an image scanned by the communication apparatus having a scan function, the opposite terminal cannot upload, to the Internet, the image received from the communication apparatus in this state. To upload the received image to the Internet, it is necessary to disconnect direct connection from the communication apparatus and perform reconnection to the access point.

On the other hand, in a case where the opposite terminal supports simultaneous connection of a wireless infrastructure connection and wireless direct connection, even if the opposite terminal and the printer are directly connected by the WFD R2 method, the wireless infrastructure connection can be maintained intact. Therefore, for example, the opposite terminal can receive and acquire, from the communication apparatus, an image scanned by the communication apparatus having the scan function, and can upload, to the Internet, the image received from the communication apparatus in this state.

In consideration of the above situation, in a status in which both the legacy WFD connection method and the WFD R2 method can be used, it is desirable to prioritize connection by the WFD R2 method.

On the other hand, in a case of a communication apparatus that supports both connection by the legacy method and connection by the WFD R2 method, for example, it is considered that menu items are divided into a menu item for the legacy method and a menu item for the WFD R2 method and a QR code for performing WFD connection by the method corresponding to the menu item selected by the user is displayed. However, with this configuration, the user of the opposite terminal does not know which of the menu items should be selected unless the user knows whether the opposite terminal used is of a model supporting each of the legacy method and the WFD R2 method of the WFD standards. In many cases, the user does not recognize the presence of a plurality of WFD methods, the feature of each method, and which method is supported by the model used by himself/herself.

In consideration of the above problems, this embodiment provides a mechanism of providing a more preferable connection state and preventing a menu structure from being complicated without the user being aware of which of the legacy method and the WFD R2 method is to be used for connection.

### (System Configuration)

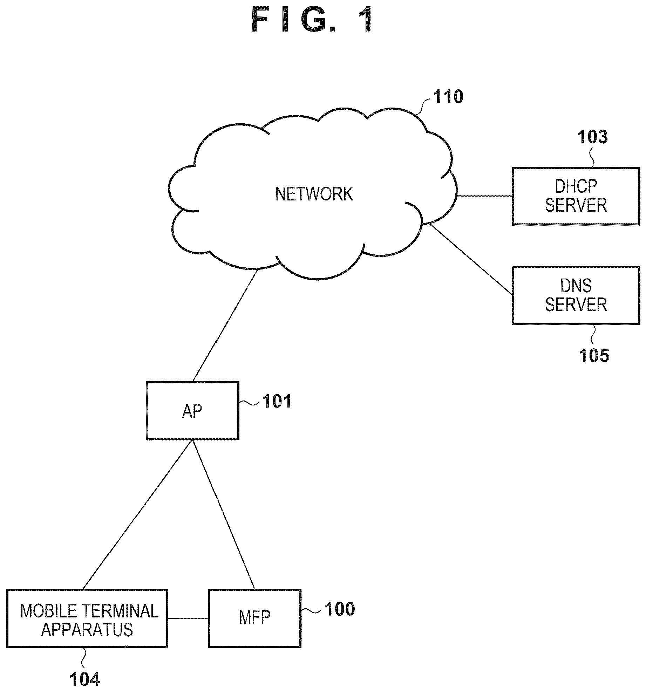

Fig. 1 shows an example of the configuration of a system according to this embodiment. In an example, the system is a wireless communication system in which a plurality of communication apparatuses can communicate with each other wirelessly. In the example of Fig. 1, the system includes a mobile terminal apparatus 104 and an MFP 100 as communication apparatuses, an AP 101 as an access point, a DHCP server 103, and a network 110. The mobile terminal apparatus 104 is an apparatus having a wireless communication function by a wireless LAN or the like. Note that the wireless LAN will sometimes be referred to as WLAN hereinafter. The mobile terminal apparatus 104 can be a personal information terminal such as a Personal Digital Assistant (PDA), a mobile phone (smartphone), a digital camera, a personal computer, or the like.

The MFP 100 is a printing apparatus having a printing function, and may further have a reading function (scanner), a FAX function, and a telephone function. The MFP 100 according to this embodiment has a communication function capable of wirelessly communicating with the mobile terminal apparatus 104. A case where the MFP 100 is used will be exemplified in this embodiment, but the present disclosure is not limited to this. For example, a scanner, a projector, a mobile terminal, a smartphone, a notebook PC, a tablet terminal, a PDA, a digital camera, a music player, a television, or a smart speaker having a communication function may be used instead of the MFP 100. Note that the MFP is an acronym for Multi Function Peripheral.

The AP 101 is provided separately from (outside) the mobile terminal apparatus 104 and the MFP 100, and operates as a WLAN base station apparatus. A communication apparatus having a WLAN communication function can communicate in a WLAN infrastructure mode via the AP 101. Note that the access point will sometimes be referred to as "AP" hereinafter. The infrastructure mode will sometimes be referred to as "wireless infrastructure mode" hereinafter. The AP 101 performs wireless communication with a communication apparatus for which the AP 101 permits (authenticates) connection to the AP 101, and relays wireless communication between the communication apparatus and another communication apparatus. The AP 101 is connected to, for example, a wired communication network, and can relay communication between a communication apparatus connected to the wired communication network and another communication apparatus wirelessly connected to the AP 101.

The DHCP server 103 is connected to the MFP 100 via the AP 101 and the network 110, and provides services to the MFP 100 in response to a request from the MFP 100. Note that it has been described with reference to Fig. 1 that the DHCP server 103 is configured to be connected as an apparatus separately from the AP 101 but the AP 101 may be configured to have a DHCP server function. A DNS server 105 is connected to the MFP 100 or the mobile terminal apparatus 104 via the AP 101 and the network 110, and provides a service for resolving a name by responding to a request from the MFP 100 or the mobile terminal apparatus 104. The network 110 may be the so-called Internet, or a closed office network or a mobile phone network.

### (Outer Appearance Arrangement of MFP)

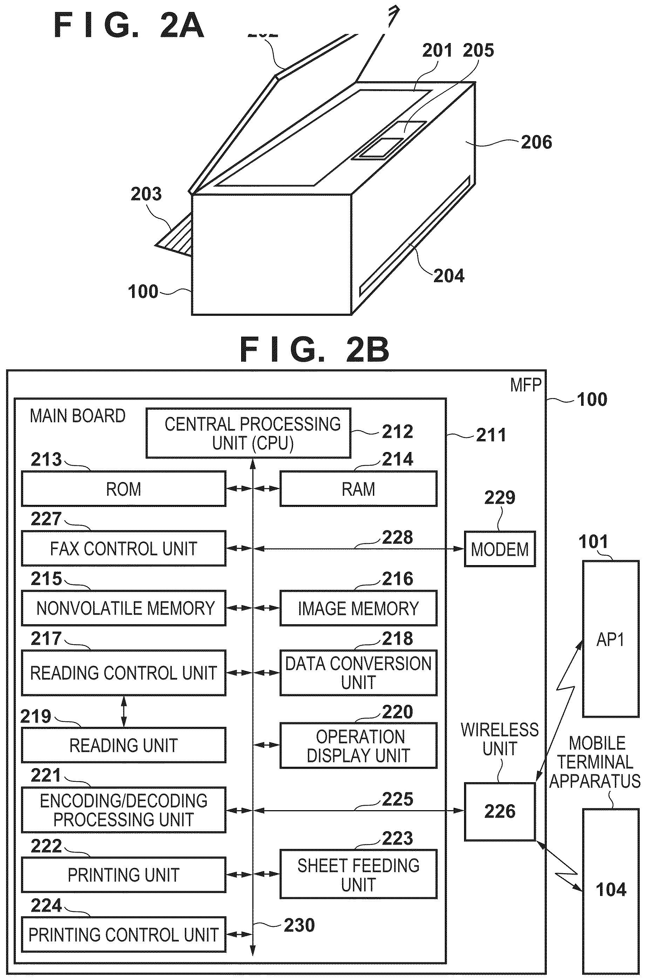

Fig. 2A shows an example of the outer appearance arrangement of the MFP 100. The MFP 100 includes, for example, a document table 201, a document cover 202, a print sheet insertion port 203, a print sheet discharge port 204, and an operation display unit 205. The document table 201 is a table on which a document to be read is placed. The document cover 202 is a cover that presses a document on the document table 201 and prevents outward leakage of light from a light source irradiating the document at the time of reading. The print sheet insertion port 203 is an insertion port at which sheets of various sizes can be set. The print sheet discharge port 204 is a discharge port from which a sheet upon printing is discharged. Sheets set at the print sheet insertion port 203 are conveyed one by one to a printing unit, and after printing by the printing unit, discharged from the print sheet discharge port 204. The operation display unit 205 includes keys such as character input keys, cursor keys, an OK key, and a cancel key, an LED, and an LCD, and is configured to be able to accept activation of various functions of the MFP and an operation of various settings by the user. The operation display unit 205 may include a touch panel display. The MFP 100 has a WLAN wireless communication function, and includes a wireless communication antenna 206 for the wireless communication that need not always be visible from the outer appearance. Similar to the mobile terminal apparatus 104, the MFP 100 can perform wireless communication in the 2.4-, 5-, and 6-GHz frequency bands by the WLAN.

### (Arrangement of MFP)

Fig. 2B shows an example of the arrangement of the MFP 100. The MFP 100 includes a main board 211 that performs main control of the MFP 100, and a wireless unit 226 serving as one communication module that performs WLAN communication using at least one common antenna. The MFP 100 also includes a modem 229 for performing, for example, wired communication. The main board 211 includes, for example, a central processing unit (CPU) 212, a ROM 213, a RAM 214, a nonvolatile memory 215, an image memory 216, a reading control unit 217, a data conversion unit 218, a reading unit 219, and an encoding/decoding processing unit 221. The main board 211 includes, for example, a printing unit 222, a sheet feeding unit 223, a printing control unit 224, and an operation display unit 220. The functional units in the main board 211 are connected to each other via a system bus 230 managed by the CPU 212. The main board 211 and the wireless unit 226 are connected via, for example, a dedicated bus 225, and the main board 211 and the modem 229 are connected via, for example, a bus 228.

The CPU 212 is a system control unit including at least one processor, and controls the overall MFP 100. In an example, processing of the MFP 100 to be described below is implemented by executing a program stored in the ROM 213 by the CPU 212. Note that hardware dedicated to each process may be prepared. The ROM 213 stores control programs to be executed by the CPU 212, an embedded OS program, and the like. In the embodiment, the CPU 212 executes each control program stored in the ROM 213 under the management of the embedded OS similarly stored in the ROM 213, thereby performing software control such as scheduling or task switching.

The RAM 214 is constituted by an SRAM or the like. The RAM 214 stores data such as program control variables, and data such as set values registered by the user and management data of the MFP 100. The RAM 214 can be used as various work buffers. The nonvolatile memory 215 is constituted by a memory such as a flash memory, and keeps storing data even after the MFP 100 is turned off. The image memory 216 is constituted by a memory such as a DRAM. The image memory 216 accumulates image data received via the wireless unit 226, image data processed by the encoding/decoding processing unit 221, and the like. Note that the memory configuration of the MFP 100 is not limited to the above-described one. The data conversion unit 218 performs analysis of data of various forms, conversion from image data into print data, and the like.

The reading control unit 217 controls the reading unit 219 (for example, a contact image sensor (CIS)) to optically read a document on the document table 201. The reading control unit 217 converts an image obtained by optically reading the document into electrical image data (image signal), and outputs the image data. At this time, the reading control unit 217 may output image data after performing various image processes such as binarization processing and halftone processing.

The operation display unit 220 is the operation display unit 205 described with reference to Fig. 2A, and executes display on a display based on display control by the CPU 212, generation of a signal in response to acceptance of a user operation, and the like.

The encoding/decoding processing unit 221 performs encoding processing, decoding processing, and scaling processing on image data (JPEG, PNG, and the like) handled by the MFP 100.

The sheet feeding unit 223 holds sheets for printing. The sheet feeding unit 223 can supply a set sheet under the control of the printing control unit 224. The sheet feeding unit 223 may include a plurality of sheet feeding units in order to hold sheets of a plurality of types in one apparatus, and can control which sheet feeding unit feeds a sheet under the control of the printing control unit 224.

The printing control unit 224 performs various image processes such as smoothing processing, print density correction processing, and color correction on image data to be printed, and outputs the processed image data to the printing unit 222. The printing unit 222 is configured to be able to execute printing processing by, for example, the inkjet printing method, and discharges, from a printhead, ink supplied from an ink tank to print an image on a print medium such as a sheet. Note that the printing unit 222 may be configured to be able to execute another printing processing by the electrophotographic method or the like. The printing control unit 224 can periodically read out information of the printing unit 222, and update status information and the like that are stored in the RAM 214 and include the remaining amount of the ink tank and the state of the printhead.

The wireless unit 226 is a unit capable of providing the WLAN communication function, and can provide, for example, a function similar to a combination of a WLAN unit 401 of the mobile terminal apparatus 104. That is, the wireless unit 226 converts data into a packet in accordance with the WLAN standard, and transmits the packet to another device. In addition, the wireless unit 226 restores original data from a packet from another external device, and outputs the data to the CPU 212. The wireless unit 226 can communicate as a station complying with the IEEE 802.11 standard series. In particular, the wireless unit 226 can communicate as a station complying with IEEE 802.11a/b/g/n/ac/ax. The station will sometimes be referred to as the STA hereinafter.

The wireless unit 226 complies with IEEE 802.11ax, that is, Wi-Fi 6^{™}, and can perform processing complying with IEEE 802.11ax. That is, the MFP 100 can perform one or both of processing as an STA supporting (complying with) OFDMA and an operation (processing) as an STA supporting (complying with) TWT. OFDMA is an abbreviation for Orthogonal Frequency-Division Multiple Access. TWT is an abbreviation for Target Wake Time. Since the MFP 100 supports TWT, the timing of data communication from a master device to an STA is adjusted. The wireless unit 226 (MFP 100) as the STA shifts the communication function to a sleep state when it need not wait for signal reception. This can suppress power consumption. The wireless unit 226 also supports Wi-Fi 6E^{™}. That is, the wireless unit 226 can communicate even in the 6-GHz band (5.925 GHz to 7.125 GHz). A target band present in the 5-GHz band in which Dynamic Frequency Selection (DFS) is performed does not exist in the 6-GHz band. In the 6-GHz band communication, therefore, a communication disconnection caused by the DFS standby time does not occur, and more comfortable communication can be expected. In this example, processing complying with IEEE 802.11ax is performed but the mobile terminal apparatus 104 and the MFP 100 may operate in compliance with another standard of the IEEE 802.11 series. For example, the mobile terminal apparatus 104 and the MFP 100 may comply with a standard after IEEE 802.11be.

Note that the mobile terminal apparatus 104 and the MFP 100 can perform WFD-based P2P (WLAN) communication, and the wireless unit 226 has a software access point (software AP) function or a group owner function. That is, the wireless unit 226 can construct a P2P communication network and decide a channel to be used in P2P communication. WFD is based on the standard formulated by the Wi-Fi Alliance. The wireless unit 226 can also operate as a WFD client.

### (Operation Display Unit of MFP)

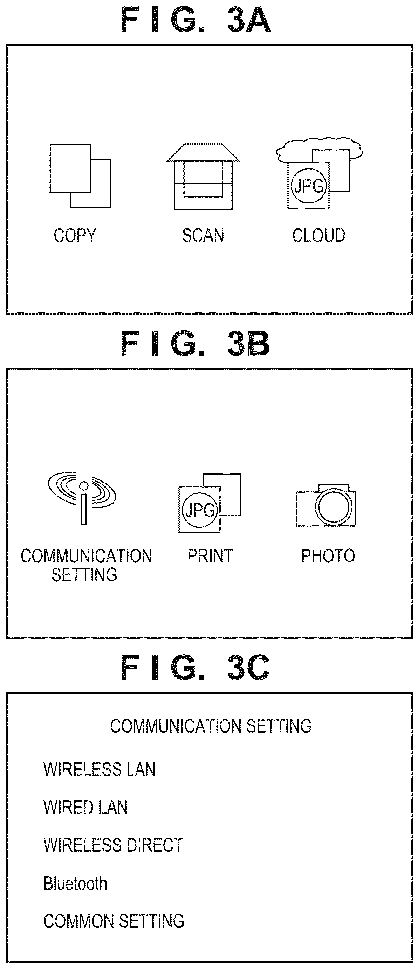

Figs. 3A to 3C each schematically show an example of a screen display on a display (touch panel display) included in the operation display unit 220 of the MFP 100. Fig. 3A shows an example of a home screen displayed during a state (idle state or Standby state) in which the MFP 100 is turned on and an operation such as printing or scanning is not performed. In Fig. 3A, display items (menu items) corresponding to copy, scan, and cloud are displayed. Cloud is a menu item regarding a cloud function using Internet communication. When any menu item is selected by a key operation or a touch panel operation, the MFP 100 can start executing a corresponding setting or function. The MFP 100 can seamlessly display a screen different from one in Fig. 3A by accepting a key operation or a touch panel operation on the home screen in Fig. 3A.

Fig. 3B shows a display example of another portion of the home screen. This screen is shifted from the state in Fig. 3A by an operation (for example, a slide operation to left or right) of displaying another page of the home screen. In Fig. 3B, display items (menu items) corresponding to communication setting, print, and photo are displayed. When any menu item is selected, a function corresponding to the selected menu item, that is, any of the printing function, photo function, and communication setting is executed.

Fig. 3C shows a display example of the menu screen of the communication setting displayed when the communication setting is selected on the screen in Fig. 3B. The menu screen of the communication setting displays menu items (options) "wireless LAN", "wired LAN", "wireless direct", "Bluetooth", and "common setting". "Wireless LAN", "wired LAN", and "wireless direct" are menu items for performing LAN setting. From these items, settings such as setting of wired connection, enable/disable setting of the wireless infrastructure mode, and enable/disable setting of the P2P mode such as a WFD or software AP mode can be performed. When the item "wireless LAN" is selected and the wireless LAN is enabled by a user operation, the wireless infrastructure mode is enabled. When the item "wireless direct" is selected and the wireless direct is enabled by a user operation, the P2P (WLAN) mode is enabled. On this screen, a common setting menu regarding various connection forms is also displayed. The user can perform, from this screen, setting of the frequency band and frequency channel of the wireless LAN, and the like.

### (Outer Appearance Arrangement of Mobile Terminal Apparatus)

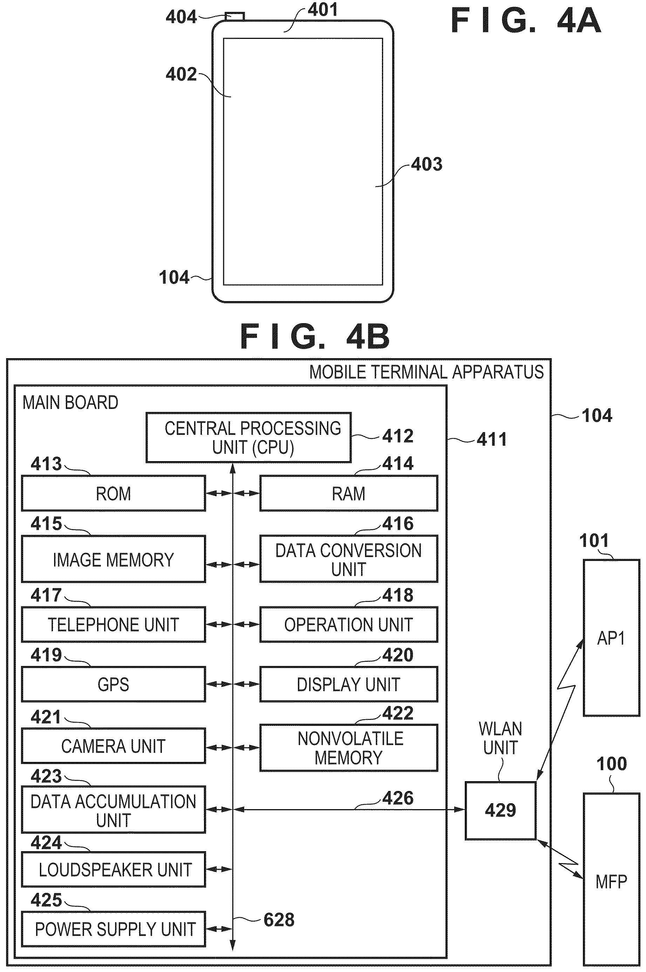

Fig. 4A is a view showing an example of the outer appearance arrangement of the mobile terminal apparatus 104. In this embodiment, a case where the mobile terminal apparatus 104 is a smartphone of a general form will be exemplified. Note that the mobile terminal apparatus 104 includes, for example, a display unit 402, an operation unit 403, and a power key 404. The display unit 402 is, for example, a display including a Liquid Crystal Display (LCD) type display mechanism. Note that the display unit 402 may display information using, for example, a Light Emitting Diode (LED) or the like. The mobile terminal apparatus 104 may have a function of outputting information by an audio, in addition to or instead of the display unit 402. The operation unit 403 includes hardware keys such as keys and buttons and a touch panel for detecting a user operation. Note that in this example, information display on the display unit 402 and acceptance of a user operation by the operation unit 403 are performed using a common touch panel display, and the display unit 402 and the operation unit 403 are implemented by one device. In this case, for example, button icons and a software keyboard are displayed using the display function of the display unit 402, and touches of these portions by the user are detected by the operation acceptance function of the operation unit 403. Note that it is also possible to separate the display unit 402 and the operation unit 403, and separately prepare display hardware and operation acceptance hardware. The power key 404 is a hardware key for accepting a user operation of turning on or off the mobile terminal apparatus 104.

The mobile terminal apparatus 104 includes the WLAN unit 401 which provides the WLAN communication function though it need not always be visible from the outer appearance. The WLAN unit 401 is configured to be able to execute data (packet) communication in a WLAN system complying with, for example, the IEEE 802.11 standard series (for example, IEEE 802.11a/b/g/n/ac/ax). The WLAN unit 401 can communicate as an AP complying with Wi-Fi Agile Multiband^{™}. However, the WLAN unit 401 is not limited to this, and may be able to execute communication of a WLAN system complying with another standard. Note that this example assumes that the WLAN unit 401 can communicate in the 2.4-, 5-, and 6-GHz frequency bands. In addition, the WLAN unit 401 can execute WFD-based communication, communication in the software AP mode, communication in the wireless infrastructure mode, and the like. Operations in these modes will be described later.

### (Arrangement of Mobile Terminal Apparatus)

Fig. 4B shows an example of the arrangement of the mobile terminal apparatus 104. In an example, the mobile terminal apparatus 104 includes a main board 411 that performs main control of the mobile terminal apparatus 104, and a WLAN unit 429 that performs WLAN communication. The main board 411 includes, for example, a CPU 412, a ROM 413, a RAM 414, an image memory 415, a data conversion unit 416, a telephone unit 417, a GPS 419, a camera unit 421, a nonvolatile memory 422, a data accumulation unit 423, a loudspeaker unit 424, and a power supply unit 425. The CPU is an acronym for Central Processing Unit, the ROM is an acronym for Read Only Memory, the RAM is an acronym for Random Access Memory, and the GPS is an acronym for Global Positioning System. The mobile terminal apparatus 104 also includes a display unit 420 and an operation unit 418. The functional units in the main board 411 are connected to each other via a system bus 628 managed by the CPU 412. The main board 411 and the WLAN unit 429 (the above-described WLAN unit 401) are connected via, for example, a dedicated bus 426.

The CPU 412 is a system control unit including at least one processor, and controls the overall mobile terminal apparatus 104. In an example, processing of the mobile terminal apparatus 104 to be described below is implemented by executing a program stored in the ROM 413 by the CPU 412. Note that hardware dedicated to each process may be prepared. The ROM 413 stores control programs to be executed by the CPU 412, an embedded operating system (OS) program, and the like. In this embodiment, the CPU 412 executes each control program stored in the ROM 413 under the management of the embedded OS similarly stored in the ROM 413, thereby performing software control such as scheduling or task switching.

The RAM 414 is constituted by a Static RAM (SRAM) or the like. The RAM 414 stores data such as program control variables, and data such as set values registered by the user and management data of the mobile terminal apparatus 104. The RAM 414 can be used as various work buffers. The image memory 415 is constituted by a memory such as a Dynamic RAM (DRAM). The image memory 415 temporarily stores image data received via the WLAN unit 429 and image data read out from the data accumulation unit 423 so as to be processed by the CPU 412. The nonvolatile memory 422 is constituted by a memory such as a flash memory, and keeps storing data even after the mobile terminal apparatus 104 is turned off. Note that the memory configuration of the mobile terminal apparatus 104 is not limited to the above-described one. For example, the image memory 415 and the RAM 414 may be shared, or the data accumulation unit 423 may be used to perform backup of data or the like. The DRAM is exemplified as the image memory 415 in this embodiment, but another storage medium such as a hard disk or a nonvolatile memory may be used.

The data conversion unit 416 performs analysis of data of various forms, and data conversion such as color conversion or image conversion. The telephone unit 417 controls a telephone line, and processes audio data input/output via the loudspeaker unit 424, thereby implementing telephone communication. The GPS 419 receives radio waves sent from a satellite and acquires position information such as the current latitude and longitude of the mobile terminal apparatus 104.

The camera unit 421 has a function of electronically recording an image input via a lens and encoding it. Image data obtained by image capturing by the camera unit 421 is saved in the data accumulation unit 423. The loudspeaker unit 424 performs control for implementing a function of inputting or outputting a speech for the telephone function, and a function such as alarm notification. The power supply unit 425 is, for example, a portable battery and performs power supply control into the apparatus. The power supply state includes, for example, a battery dead state in which the battery runs out, a power-off state in which the power key 404 is not pressed, an active state in which the mobile terminal apparatus 104 is normally activated, and a power saving state in which the mobile terminal apparatus 104 is activated but power is saved.

The display unit 420 is the display unit 402 described with reference to Fig. 4A, and displays various input operations, the operation state and status condition of the MFP 100, and the like based on the control of the CPU 412. The operation unit 418 is the operation unit 403 described with reference to Fig. 4A, and executes control of, upon accepting a user operation, generating an electrical signal corresponding to the operation and outputting it to the CPU 412.

The mobile terminal apparatus 104 performs wireless communication using the WLAN unit 429, and performs data communication with another device such as the MFP 100. The WLAN unit 429 converts data into a packet, and transmits the packet to another device. In addition, the WLAN unit 429 restores original data from a packet from another external device, and outputs the data to the CPU 412. The WLAN unit 429 is a unit for implementing communication complying with the WLAN standard. The WLAN unit 429 can operate concurrently in at least two communication modes including the wireless infrastructure mode and the P2P (WLAN) mode. Note that frequency bands used in these communication modes can be restricted by the hardware functions and performance.

### (Arrangement of Access Point)

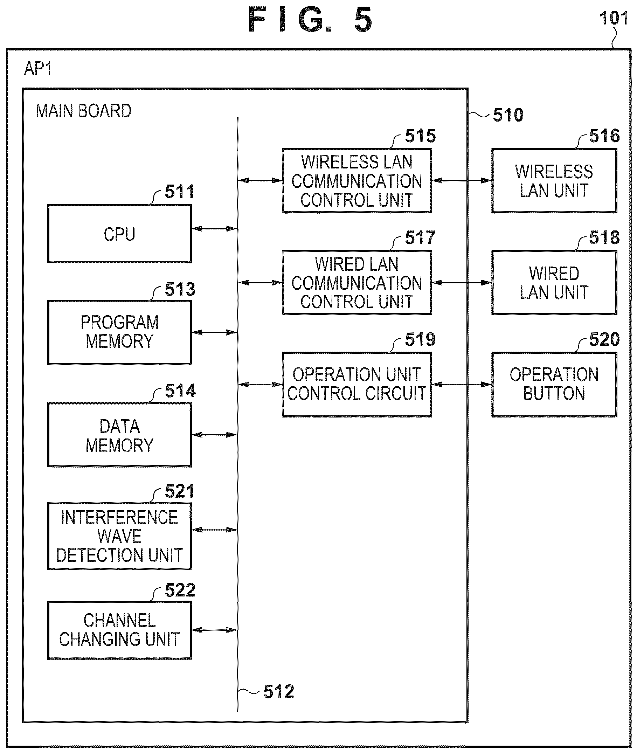

Fig. 5 is a block diagram showing the arrangement of the AP 101 having a wireless LAN access point function. The AP 101 includes a main board 510 that controls the AP 101, a wireless LAN unit 516, a wired LAN unit 518, and an operation button 520.

A CPU 511 in the form of a microprocessor arranged on the main board 510 operates in accordance with a control program stored in a program memory 513 in the form of a ROM connected via an internal bus 512, and contents in a data memory 514 in the form of a RAM. The CPU 511 performs wireless LAN communication with another communication terminal apparatus by controlling the wireless LAN unit 516 via a wireless LAN communication control unit 515. The CPU 511 performs wired LAN communication with another communication terminal apparatus by controlling the wired LAN unit 518 via a wired LAN communication control unit 517. The CPU 511 can accept an operation from the user via the operation button 520 by controlling an operation unit control circuit 519. The CPU 511 includes at least one processor.

The AP 101 also includes an interference wave detection unit 521 and a channel change unit 522. The interference wave detection unit 521 performs interference wave detection processing when wireless communication is executed in a band in which Dynamic Frequency Selection (DFS) is executed. While wireless communication is executed in the band in which DFS is executed, when an interference wave is detected, when the channel has to be immediately changed to a free channel, or the like, the channel change unit 522 performs change processing of a channel used.

### (P2P Communication Method)

Next, a P2P (WLAN) communication method in which apparatuses wirelessly communicate with each other directly without intervention of an external access point in WLAN communication will be generally explained. P2P (WLAN) communication can be implemented using a plurality of methods. For example, a communication apparatus supports a plurality of modes for P2P (WLAN) communication, and can execute P2P communication (WLAN) by selectively using any one of these modes.

As the P2P mode, the following two modes are assumed:
- software AP mode
- Wi-Fi Direct (WFD) mode

A communication apparatus capable of executing P2P communication can be configured to support at least either of these modes. However, even a communication apparatus capable of executing P2P communication need not support all these modes, and may be configured to support only some of the modes.

A communication apparatus (for example, the mobile terminal apparatus 104) having a WFD communication function accepts a user operation via the operation unit, and invokes an application (in some cases, a dedicated application) for implementing the communication function. The communication apparatus can display a user interface (UI) screen provided by the application to prompt a user operation, and execute WFD communication based on a user operation accepted in response.

### ●Software AP Mode

In the software AP mode, a communication apparatus (for example, the mobile terminal apparatus 104) operates as the role of a client that requests various services. The other communication apparatus (for example, the MFP 100) operates as a software AP capable of executing a WLAN AP function by software setting. Note that commands and parameters transmitted/received when establishing wireless connection between the client and the software AP suffice to be those defined by the Wi-Fi^{®} standard, so a description thereof will be omitted here. The MFP 100 operating in the software AP mode decides, as a master station, a frequency band and a frequency channel. The MFP 100 can select which of the 2.4-, 5-, and 6-GHz frequency bands is used, and which frequency channel is used in the frequency band. In the software AP mode, there is no negotiation for deciding roles, and it is unnecessary to comply with the WFD standard formulated by the Wi-Fi Alliance.

### ●WFD Mode

The MFP 100 may be statically activated as a master station in the WFD mode (Autonomous Group Owner). Note that Autonomous Group Owner will sometimes be referred to as Auto GO hereinafter. In this case, GO Negotiation processing for deciding roles becomes unnecessary. In addition, in this case, the MFP 100 decides, as a master station, a frequency band and a frequency channel. The MFP 100 can select which of the 2.4-, 5-, and 6-GHz frequency bands is used, and which frequency channel is used in the frequency band. In the WFD mode, it may be configured to perform negotiation (GO Negotiation) for deciding apparatuses that operate as a group owner and a client, respectively.

### (Wireless Infrastructure Mode)

In the wireless infrastructure mode, communication apparatuses (for example, the mobile terminal apparatus 104 and the MFP 100) that communicate with each other are connected to an external AP (for example, the AP 101) that controls the overall network, and communication between the communication apparatuses is performed via the AP. In other words, communication between the communication apparatuses is performed via the network constructed by the external AP. Each of the mobile terminal apparatus 104 and the MFP 100 finds the AP 101, transmits a connection request to the AP 101, and is connected to the AP 101, thereby enabling communication in the wireless infrastructure mode between these communication apparatuses via the AP 101. Note that a plurality of communication apparatuses may be connected to separate APs. In this case, communication between the communication apparatuses becomes possible by transferring data between the APs. Commands and parameters transmitted/received in communication between communication apparatuses via an access point suffice to be those defined by the Wi-Fi standard, so a description thereof will be omitted here. In this case, the AP 101 decides a frequency band and a frequency channel. The AP 101 can select which of the 2.4-, 5-, and 6-GHz frequency bands is used, and which frequency channel is used in the frequency band.

Assume that WFD includes a method of the conventional standard and a method of a new standard. That is, in the WFD standard, there are a plurality of methods of different standard versions. The conventional WFD method will be referred to as WFD R1 hereinafter, and the new WFD method will be referred to as WFD R2 hereinafter. WFD R1 and WFD R2 are different in terms of an apparatus search method and a parameter exchange method.

### (Connection Processing of Conventional WFD Standard)

The mobile terminal apparatus 104 and the MFP 100 support a function released to the public as Wi-Fi Direct. Wi-Fi Direct is a function of enabling establishment of a proprietary Wi-Fi network without requiring Internet connection by Wi-Fi Direct-enabled devices. More specifically, Wi-Fi Direct-enabled devices like the mobile terminal apparatus 104 and the MFP 100 can be connected to each other directly even in an environment where there is no AP 101 or the like.

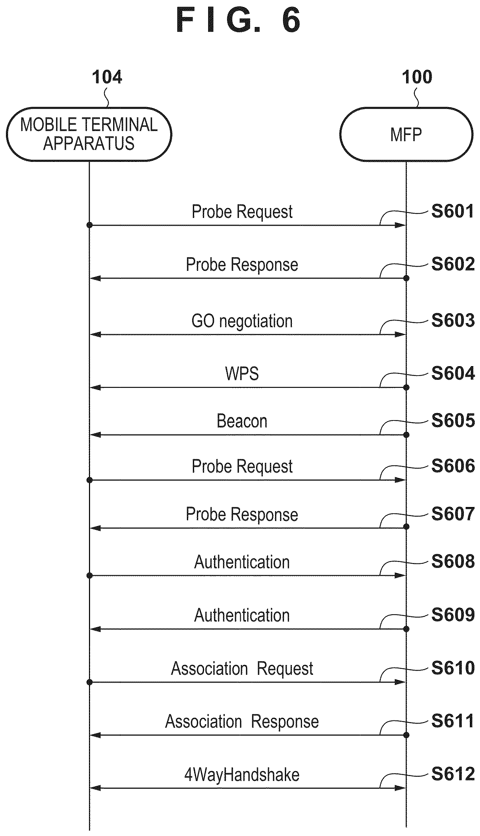

Fig. 6 is a sequence chart showing processing of connecting the mobile terminal apparatus 104 and the MFP 100 in compliance with the WFD standard. Fig. 6 shows the processing sequence of WFD R1. Processing executed by each apparatus in this sequence is implemented by reading out various programs stored in the memory of each apparatus such as a ROM to a RAM and executing them by the CPU of each apparatus.

When, for example, each of the mobile terminal apparatus 104 and the MFP 100 accepts a WFD start instruction from the user, the processing of the sequence starts. Upon accepting a WFD start operation from the user, each of the mobile terminal apparatus 104 and the MFP 100 searches for the partner apparatus by repeating a Listen state and a Search state. Before these states, there may be a period in which each channel is scanned. In the Listen state, for example, the apparatus selects channel 1 in the 2.4-GHz band, and waits for a Probe Request frame from another communication apparatus. In the Search state, the apparatus transmits a Probe Request frame while switching a frequency channel (for example, channel 1, 6, or 11), and stands by for a Probe Response frame.

In S601, the mobile terminal apparatus 104 transmits a Probe Request frame to search for a WFD communication apparatus. By transmitting the Probe Request frame, a searched-side partner apparatus is searched for. Assume here that the search-side communication apparatus is the mobile terminal apparatus 104 and the searched-side partner apparatus is the MFP 100. The Probe Request frame includes a WFD attribute (P2P IE), thereby specifying that the search target is a WFD communication apparatus.

In S602, upon receiving the Probe Request frame, the MFP 100 transmits a Probe Response frame. Upon receiving the Probe Response frame transmitted by the MFP 100, the mobile terminal apparatus 104 detects the MFP 100 as a WFD communication partner. Note that each of the Probe Request frame and the Probe Response frame includes the P2P IE, and can include a Multi-Link element. The Multi-Link element can include communication parameters used for multi-link communication defined by the IEEE 802.11be standard. This makes it possible to set a plurality of links between the communication apparatuses by one connection procedure. As described above, in WFD R1, it is possible to detect the presence of another communication apparatus by the first search processing using the Probe Request/Response frames. The above-described first search processing is the search sequence of WFD R1.

In S603, the mobile terminal apparatus 104 and the MFP 100 perform GO Negotiation processing. In the GO Negotiation processing, a channel to be used for direct wireless communication may be decided. In the GO Negotiation processing, the mobile terminal apparatus 104 and the MFP 100 transmit or receive a GO Negotiation Request/Response frame including an intent value indicating the degree to which the apparatus wants to be a GO. With the GO Negotiation Request/Response frames, the roles of a P2P group owner (GO) and a P2P client are decided. The MFP 100 may be statically activated as a master station (GO) in the WFD mode (Autonomous Group Owner). In this case, the GO Negotiation processing for deciding the roles becomes unnecessary. By setting the intent value of the MFP 100 to the maximum of 15, the MFP 100 executes the GO Negotiation processing but may always operate as a GO. In this case, the MFP 100 decides, as a master station, a frequency band and a frequency channel to be used for direct wireless communication. Therefore, the MFP 100 can select which of the 2.4- and 5-GHz frequency bands is used, and which frequency channel is used in the frequency band.

In S604, the mobile terminal apparatus 104 and the MFP 100 exchange communication parameters by Wi-Fi Protected Setup (WPS) processing. The communication parameters can include parameters used for wireless communication, such as a Service Set Identifier (SSID), an encryption method, an encryption key, an authentication method, AKM, a BSSID, and a MAC Address. AKM is an abbreviation for Authentication and Key Management. AKM indicates a key exchange algorithm or an authentication protocol used for wireless communication. For example, if AKM indicates "SAE", the communication parameters can include a password for connection to a GO or an AP complying with Wi-Fi Protected Access (WPA) 3. If AKM indicates "psk", the communication parameters can include a Pre Shared Key (PSK)/passphrase for connection to a GO or an AP complying with WPA2. If AKM indicates "1X", the communication parameters can include an ID, a password, and a public key for connection to an AP complying with WPA-Enterprise. Note that the password and the PSK/passphrase are encryption keys when performing authentication/key exchange based on WPA or IEEE 802.11. The WPS processing in S604 is the communication parameter exchange sequence of WFD R1. From the processing in S604, a channel changed from the channel used in S601 to S603 may be used for communication.

In S605, when it is decided that the MFP 100 operates as a GO, the MFP 100 starts to transmit a Beacon frame. The Beacon frame can include communication parameters for communication with the MFP 100. The Beacon frame can include information elements and attributes defined by the WFD standard. This allows a communication apparatus other than the mobile terminal apparatus 104 to detect the presence of the MFP 100 and to perform direct wireless communication connection to the MFP 100. For example, another communication apparatus can detect the presence of the MFP 100 by receiving the Beacon frame including the information defined by the WFD standard.

In S606, the mobile terminal apparatus 104 transmits a Probe Request frame to execute a connection procedure with the MFP 100. In S607, upon receiving the Probe Request frame, the MFP 100 transmits a Probe Response frame.

In S608, the mobile terminal apparatus 104 transmits an Authentication frame. In S609, upon receiving the Authentication frame, the MFP 100 transmits an Authentication frame.

In S610, upon receiving the Authentication frame, the mobile terminal apparatus 104 transmits an Association Request frame. In S611, upon receiving the Association Request frame, the MFP 100 transmits an Association Response frame.

In S612, the mobile terminal apparatus 104 and the MFP 100 execute 4-Way Handshake. By executing the connection procedure, connection between the mobile terminal apparatus 104 and the MFP 100 is established.

Although not shown in the above-described sequence, the mobile terminal apparatus 104 and the MFP 100 may transmit or receive a Provision Discovery Request/Response frame. The above-described processing of the mobile terminal apparatus 104 and the MFP 100 may be reversed.

### (Connection Processing of New WFD Standard)

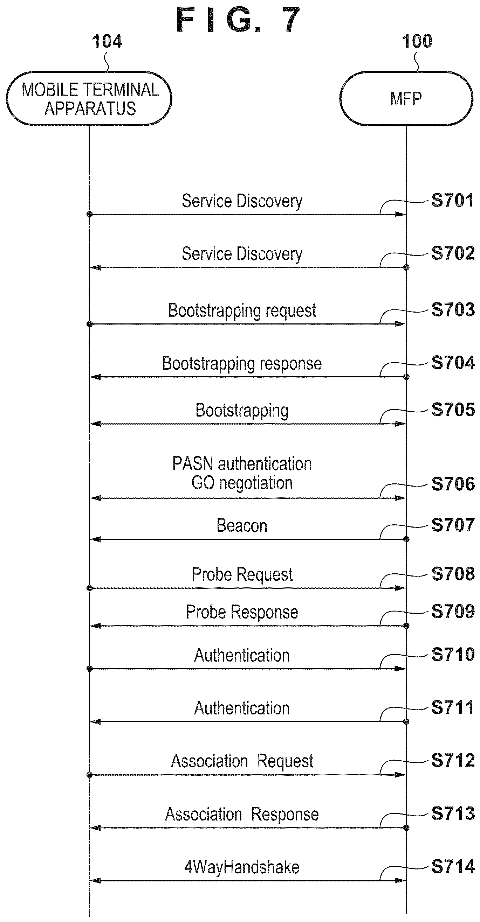

Fig. 7 is a sequence chart showing processing of connecting the mobile terminal apparatus 104 and the MFP 100 in compliance with the WFD standard. Fig. 7 shows the processing sequence of WFD R2. Processing executed by each apparatus in this sequence is implemented by reading out various programs stored in the memory of each apparatus such as a ROM to a RAM and executing them by the CPU of each apparatus.

When, for example, each of the mobile terminal apparatus 104 and the MFP 100 accepts a WFD start instruction from the user, the processing of the sequence starts. In the search sequence of WFD R2, the second search processing is performed. An example of a search procedure by the second search processing is shown. In the search procedure, each of the mobile terminal apparatus 104 and the MFP 100 executes processing based on whether the self-apparatus is a service providing side communication apparatus or a service request side communication apparatus, and detects another communication apparatus. The service providing side communication apparatus can be called a Publisher, Listener, Advertiser, or the like. The service request side communication apparatus can be called a Subscriber, Searcher, Seeker, or the like. For example, the service request side communication apparatus can transmit a frame to detect another communication apparatus. The service providing side communication apparatus can receive a frame transmitted by another communication apparatus, and respond to it. A role assigned to the communication apparatus can be decided by an upper layer (a service layer or the like). An example in which the mobile terminal apparatus 104 operates as the service request side communication apparatus and the MFP 100 operates as the service providing side communication apparatus will be described with reference to Fig. 7. For example, the mobile terminal apparatus 104 intermittently performs a detection operation, and transmits a frame to detect another communication apparatus. In the second search processing, for example, the mechanism of the Wi-Fi Aware standard formulated by the Wi-Fi Alliance may be used. That is, as the frame communicated in the second search processing, a frame defined by the Wi-Fi Aware standard may be used. Not only the Wi-Fi Aware standard but also other service search protocols and methods may be used for the second search processing.

In S701, the mobile terminal apparatus 104 transmits a Service Discovery frame to search for a WFD communication apparatus. Assume here that the mobile terminal apparatus 104 transmits a Service Discovery frame using channel 6 in the 2.4-GHz band. By transmitting the Service Discovery frame, a searched-side partner apparatus is searched for. Assume here that the search-side communication apparatus is the mobile terminal apparatus 104 and the searched-side partner apparatus is the MFP 100. The Service Discovery frame includes a WFD attribute, thereby specifying that the search target is a WFD communication apparatus.

In S702, upon receiving the Service Discovery frame, the MFP 100 transmits a Service Discovery frame. The transmitted Service Discovery frame can be called SDF Follow-up. By receiving the Service Discovery frame, the mobile terminal apparatus 104 detects the MFP 100 as a WFD communication partner. The above-described second search processing is the search sequence of WFD R2. Since the first search processing of WFD R1 and the second search processing of WFD R2 are different in terms of the method, a communication apparatus complying with only WFD R1 cannot be searched for by the method of WFD R2. To the contrary, a communication apparatus complying with only WFD R2 cannot be searched for by the method of WFD R1.

In S703, the mobile terminal apparatus 104 transmits a request using a Bootstrapping Request frame. The request is a request concerning an exchange method of exchanging communication parameters. By using this frame, the mobile terminal apparatus 104 can notify the MFP 100 of an exchange method executable by itself among communication parameter exchange methods using, for example, the pressing of a button, a pin code, a passphrase, a QR code, an NFC tag, and the like. If, for example, the mobile terminal apparatus 104 can execute the exchange method using a QR code, it can indicate at least one of whether the self-apparatus can display a QR code and whether the self-apparatus can read a QR code. If the mobile terminal apparatus 104 can execute the exchange method using a passphrase, it can indicate whether one or both of a character string and a numerical value can be used. Note that if the mobile terminal apparatus 104 can execute the exchange method using a passphrase, it can indicate at least one of whether a passphrase can be displayed and whether a passphrase can be input. Furthermore, the mobile terminal apparatus 104 can indicate whether the pressing of a button can be used as a trigger for exchange of the communication parameters. The information notified by the mobile terminal apparatus 104 is not limited to these.

In S704, in response to the request using the Bootstrapping Request frame, the MFP 100 transmits a response to the mobile terminal apparatus 104 using a Bootstrapping Response frame. As an example, the MFP 100 can select an exchange method executable by itself from the exchange methods included in the request from the mobile terminal apparatus 104, and send a response including information capable of specifying the exchange method. If there is no method executable by the self-apparatus among the exchange methods included in the request, a response including information indicating it can be sent.

In S705, Bootstrapping processing is performed using the exchange method for exchanging the communication parameters, which has been decided between the communication apparatuses, thereby exchanging the communication parameters. For example, the MFP 100 displays a QR code and the mobile terminal apparatus 104 reads the QR code, thereby exchanging the communication parameters. The Bootstrapping processing in S705 is the communication parameter exchange sequence of WFD R2.

In S706, mutual authentication can be executed by PASN authentication. PASN is an abbreviation for Preassociation Security Negotiation. The communication parameters for using PASN can include the public key of each communication apparatus. The communication parameters for using PASN can be exchanged using a method not defined by the WFD standard, such as Bluetooth. As another exchange method, a temporary network including an AP may be formed and the communication apparatus may be connected to the network to acquire the communication parameters. In PASN, the mobile terminal apparatus 104 and the MFP 100 can perform GO Negotiation processing. In the GO Negotiation processing, a channel to be used for direct wireless communication may be decided. In the GO Negotiation processing, the roles of a P2P group owner (GO) and a P2P client are decided. The MFP 100 may be statically activated as a master station in the WFD mode (Autonomous Group Owner). In this case, the GO Negotiation processing for deciding the roles becomes unnecessary. By setting the intent value of the MFP 100 to the maximum of 15, the MFP 100 executes the GO Negotiation processing but may always operate as a GO. In this case, the MFP 100 decides, as a master station, a frequency band and a frequency channel to be used for direct wireless communication. Therefore, the MFP 100 can select which of the 2.4-, 5-, and 6-GHz frequency bands is used, and which frequency channel is used in the frequency band. The frequency bands usable for direct wireless communication are the 2.4-GHz band and the 5-GHz band in WFD R1 but the frequency bands usable for direct wireless communication are the 2.4-GHz band and the 5-GHz band as well as the 6-GHz band in WFD R2. In WFD R2, role decision is made after the communication parameters are exchanged, unlike WFD R1. From processing in S707, a channel changed from the channel used in S701 to S706 may be used for communication.

In S707, when it is decided that the MFP 100 operates as a GO, the MFP 100 starts to transmit a Beacon frame. The Beacon frame can include communication parameters for communication with the MFP 100. The Beacon frame can include information elements and attributes defined by the WFD standard. This allows a communication apparatus other than the mobile terminal apparatus 104 to detect the presence of the MFP 100 and to perform connection to the MFP 100. For example, another communication apparatus can detect the presence of the MFP 100 by receiving the Beacon frame including the information defined by the WFD standard.

In S708, the mobile terminal apparatus 104 transmits a Probe Request frame to execute a connection procedure with the MFP 100. In S709, upon receiving the Probe Request frame, the MFP 100 transmits a Probe Response frame.

In S710, the mobile terminal apparatus 104 transmits an Authentication frame. In S711, upon receiving the Authentication frame, the MFP 100 transmits an Authentication frame.

In S712, upon receiving the Authentication frame, the mobile terminal apparatus 104 transmits an Association Request frame. In S713, upon receiving the Association Request frame, the MFP 100 transmits an Association Response frame.

In S714, the mobile terminal apparatus 104 and the MFP 100 execute 4-Way Handshake. By executing the connection procedure, connection between the mobile terminal apparatus 104 and the MFP 100 is established.

The above-described processing of the mobile terminal apparatus 104 and the MFP 100 may be reversed. It is assumed that the P2P IE can indicate whether the apparatus complies with WFD R1 or WFD R2.

Note that Autonomous Group Owner will sometimes be referred to as Auto GO hereinafter.

### (Device Registration Processing for Direct Connection)

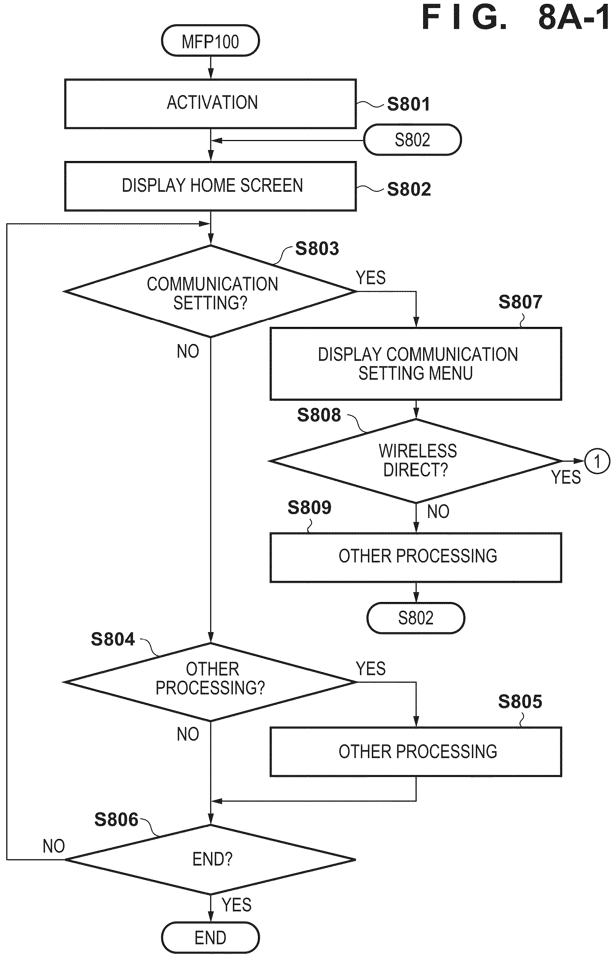

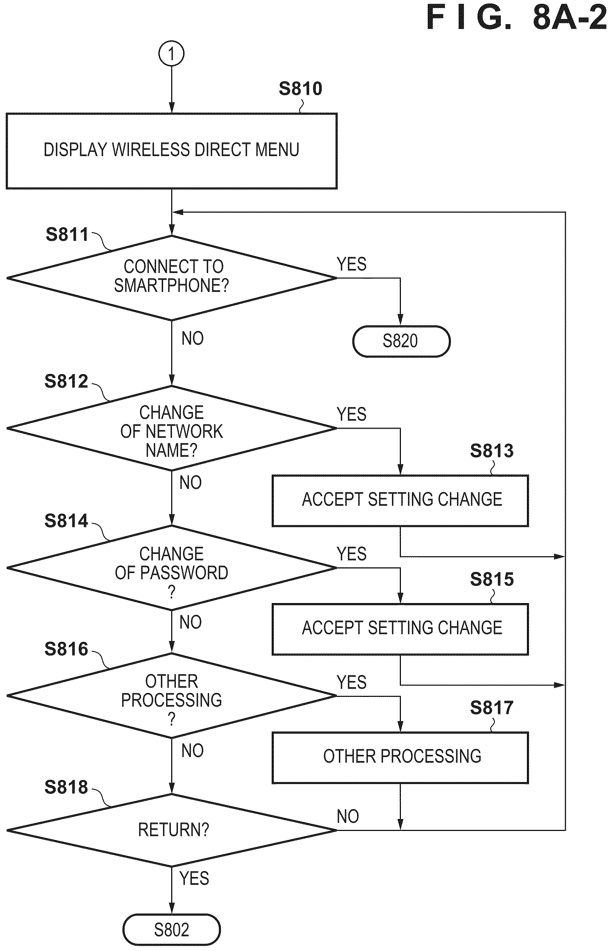

Figs. 8A-1 to 8B are flowcharts illustrating processing, in the MFP 100, associated with display of a QR code for direct connection to an external apparatus such as a mobile terminal apparatus. The QR code is used to register a device such as the MFP 100 in the mobile terminal apparatus 104. A QR code displayed on a display included in the operation display unit 220 of the MFP 100 is read by the mobile terminal apparatus 104, and information encoded as the QR code is decoded and is used to register the MFP 100 in the mobile terminal apparatus 104. The mobile terminal apparatus 104 can establish direct connection to the registered MFP 100, transmit a print job to the MFP 100, and cause the MFP 100 to execute the print job. Figs. 8A-1 to 8B include a processing procedure from when the MFP 100 displays a QR code for direct connection until connection to the mobile terminal apparatus 104 is established. Note that connection between the MFP 100 and the mobile terminal apparatus 104 may be established by the sequence shown in Fig. 6 or 7. The processing shown in Figs. 8A-1 to 8B starts upon activation of the MFP 100, but the present disclosure is not limited to activation and the processing may be executed from step S802 in accordance with a device registration instruction. The processing shown in Figs. 8A-1 to 8B is implemented by deploying (or loading) a program recorded in the nonvolatile memory 215 of the MFP 100 to the RAM 214 and executing the program by the CPU 212. Upon power-on of the MFP 100, the processing shown in Figs. 8A-1 to 8B is started. Note that direct connection will sometimes be referred to as direct communication hereinafter. Direct communication is communication complying with the Wi-Fi Direct standard. In this embodiment, two methods are adopted as direct communication methods. The legacy WFD method as the first method is a legacy method complying with the Wi-Fi Direct standard. The WFD R2 method as the second method is Wi-Fi Direct release 2 complying with the Wi-Fi Direct standard.

In step S801, the CPU 212 performs activation processing of the MFP 100. If infrastructure connection is enabled in a network setting, connection processing to an external access point is performed. If direct connection is enabled, the search processing of WFD R1 and the search processing of WFD R2 are performed.

In step S802, the CPU 212 displays, on the display included in the operation display unit 220, the home screen described with reference to Figs. 3A and 3B.

In step S803, the CPU 212 determines whether the communication setting option has been selected on the home screen. If it is determined that the communication setting has been selected, the process advances to step S807; otherwise, the process advances to step S804.

In step S804, the CPU 212 determines whether another operation has been performed. Another operation is an operation that is not an operation for communication setting, and is, for example, a copy instruction, a scan instruction, a cloud service use instruction, or the like. If it is determined that another operation has been performed, the process advances to step S805; otherwise, the process advances to step S806.

In step S805, the CPU 212 performs processing corresponding to the other operation. For example, processing corresponding to the copy, scan, or cloud service operation is performed.

In step S806, the CPU 212 determines whether an end event has occurred. The end event is, for example, an operation of turning off the MFP 100. If it is determined that the end event has occurred, the processing shown in Figs. 8A-1 to 8B ends; otherwise, the process returns to step S803 to wait for an operation.

In step S807, the CPU 212 displays, on the display included in the operation display unit 220, the communication setting menu described with reference to Fig. 3C.

In step S808, the CPU 212 determines whether "wireless direct" has been selected from the plurality of menu items included in the communication setting menu. If it is determined that "wireless direct" has been selected, the process advances to step S810; otherwise, the process advances to step S809.

In step S809, processing corresponding to the menu item selected from the communication setting menu is performed. A detailed description thereof will be omitted. After that, the process returns to step S802.

In step S810, the CPU 212 displays a wireless direct menu screen on the display included in the operation display unit 220. The wireless direct menu screen includes items for changing and displaying a setting concerning wireless direct connection, and instructing execution of wireless direct connection. On the wireless direct menu screen, for example, a plurality of menu items including "setting information display", "connection to smartphone", "switching of enabling/disabling of wireless direct", "change of network name (SSID)", and "change of password" are displayed.

In step S811, the CPU 212 determines whether "connection to smartphone" has been selected from the plurality of menu items included in the wireless direct menu screen. If it is determined that "connection to smartphone" has been selected, the process advances to step S820; otherwise, the process advances to step S812.

In step S812, the CPU 212 determines whether "change of network name (SSID)" has been selected from the plurality of menu items included in the wireless direct menu screen. If it is determined that "change of network name (SSID)" has been selected, the process advances to step S813; otherwise, the process advances to step S814.

In step S813, the CPU 212 accepts a setting change operation, in this example, a network name change operation from the user. More specifically, a character input for changing a part of the character string of a wireless direct (in this example, WFD) SSID to a character string arbitrarily set by the user is accepted. A combination of the input character string and a predetermined character sting is the SSID of the MFP 100 in WFD, and is stored as at least a part of wireless direct setting information in the nonvolatile memory 215.

In step S814, the CPU 212 determines whether "change of password" has been selected from the plurality of menu items included in the wireless direct menu screen. If it is determined that "change of password" has been selected, the process advances to step S815; otherwise, the process advances to step S816.

In step S815, the CPU 212 accepts a setting change operation, in this example, a password (pass key) change operation from the user. More specifically, a character input for changing a character string as a WFD password to a character string arbitrarily set by the user is accepted. In this example, the input character string is a WFD password, and is stored as at least a part of wireless direct setting information in the nonvolatile memory 215.

In step S816, the CPU 212 determines whether another menu item has been selected from the plurality of menu items included in the wireless direct menu screen. If it is determined that another menu item has been selected, the process advances to step S817; otherwise, the process advances to step S818.

In step S817, the CPU 212 performs setting processing corresponding to the selected menu item. For example, a security method (encryption method or authentication method) used for WFD and the like are set in accordance with a user operation. The set contents are also stored as at least a part of wireless direct setting information in the nonvolatile memory 215.

In step S818, the CPU 212 determines whether a return operation has been performed. If it is determined that no return operation has been performed, the process returns to step S811 to wait for an operation. If it is determined that the return operation has been performed, the process returns to step S802 to display the home screen.

In step S820, the CPU 212 displays a device selection menu on the display included in the operation display unit 220. The device selection menu includes, as menu items, device types as selection candidates. In the device selection menu, for example, a plurality of menu items including "iPhone/iPad"^{®} "Android"^{®}, and "Other" are displayed.

In step S821, the CPU 212 determines whether a user operation of selecting one of the menu items, that is, the device types included in the device selection menu has been performed. If it is determined that one of the menu items has been selected, the process advances to step S823; otherwise, the process advances to step S822.

In step S822, the CPU 212 determines whether a return operation has been performed. If it is determined that no return operation has been performed, the process returns to step S821 to wait for an operation. If it is determined that the return operation has been performed, the process returns to step S802 to display the home screen.

In step S823, the CPU 212 enables wireless direct (WFD). In this processing, if wireless direct has already been enabled, no particular new processing is started. If wireless direct has been disabled, it is enabled. This sets a state in which the search processing of WFD R1 and the search processing of WFD R2 can be performed.

In step S824, the CPU 212 acquires the wireless direct setting information (information indicating the setting contents set in step S813, S815, or S817) recorded in the nonvolatile memory 215 and information of the device type selected in step S821.

In step S825, the CPU 212 generates a QR code based on the information acquired in step S824. The generated QR code includes both connection information for connection by WFD R2 and connection information for connection by the legacy WFD method. In addition, the information acquired in step S824 is included in the QR code. The QR code is generated based on the setting status of the network setting. The connection information for connection by each method includes, for example, the SSID and the encryption method set in step S813 and the encryption key (password) set in step S814 in association with each connection method. A practical example of the information included in the QR code will be explained after the description of Figs. 8A-1 to 8B.

In step S826, the CPU 212 displays the QR code generated in step S825 on the display included in the operation display unit 220. Fig. 10A shows a display example at this time. On the display, a message 1001 for prompting the user to read a QR code, and a QR code 1002 are displayed. The QR code 1002 is the QR code generated in step S825. In addition, a return button 1003 is displayed. The displayed QR code is optically read and decoded by the mobile terminal apparatus 104, and the encoded information is acquired by the mobile terminal apparatus 104, and used for registration and connection (or pairing) of the MFP 100. Note that display of the QR code in step S826 and reading of the QR code by the mobile terminal apparatus 104 correspond to the Bootstrapping processing in step S705 of Fig. 7 in WFD R2. In the legacy WFD method, they correspond to provision and reading of the connection information for device registration in the mobile terminal apparatus 104. Therefore, in WFD R2, before generation and display of the QR code in steps S825 and S826, steps S701 to S704 of the procedure shown in Fig. 7 may have been executed, for example, between steps S824 and S825. At this time, assume that exchange of information by the QR code is decided by the Bootstrapping request and response frames (S703 and S704) with the mobile terminal apparatus 104. Alternatively, in WFD R2, at the time of WFD connection using the QR code displayed in generation and display of the QR code in steps S825 and S826, S701 to S704 of the procedure shown in Fig. 7 are omitted. On the other hand, in the legacy WFD method, the procedure shown in Fig. 6 is to be executed using the connection information provided to the mobile terminal apparatus 104 in step S826.

In step S827, the CPU 212 determines whether an operation of selecting the return button 1003 has been performed. If it is determined that the return button 1003 has been selected, the process returns to step S802 to display the home screen; otherwise, the process advances to step S828.

In step S828, the CPU 212 determines whether a WFD connection request has been received from any external apparatus. The received connection request includes two kinds of connection requests respectively complying with the legacy method and WFD R2. The connection request complying with the legacy method is a connection request with respect to the WFD SSID in the legacy method. In the case of the connection request complying with WFD R2, pairing processing based on the information loaded by the QR code is performed in accordance with the connection request. If the connection request complying with the legacy method or the WFD R2 method is received, the process advances to step S829; otherwise, the process returns to step S827. Note that processes in step S829 and subsequent steps will be described on the assumption that the connection request has been received from the mobile terminal apparatus 104.

In step S829, the CPU 212 sets the QR code 1002 displayed on the display in a non-display state, and displays a message indicating that connection processing is in progress.

In step S830, the CPU 212 performs WFD connection processing to the mobile terminal apparatus 104 by the method corresponding to the connection request received in step S828. In the case of the connection processing by the WFD R2 method, the CPU 212 performs the processing from S706 of Fig. 7 described above. In the case of the connection processing by the legacy method, the CPU 212 performs connection processing including authentication processing of determining whether a correct password has been received with respect to the WFD SSID in the legacy method.

In step S831, the CPU 212 determines whether WFD connection to the mobile terminal apparatus 104 has succeeded. If it is determined that connection has succeeded, the process advances to step S832; otherwise (if connection has failed), the process advances to step S833.

In step S832, the CPU 212 displays, on the display included in the operation display unit 220, a message indicating that connection has succeeded (connection has been established), and the process returns to step S802 to display the home screen. After that, the MFP 100 can perform processing (for example, printing instructed by a print job) instructed from the mobile terminal apparatus 104 via WFD communication and information transmission (for example, transmission of image data scanned by the MFP 100) to the mobile terminal apparatus 104 via WFD communication. If WFD R2 connection has been established, WFD R2 connection between the mobile terminal apparatus 104 and the MFP 100 and infrastructure connection between the mobile terminal apparatus 104 and the AP 101 are maintained simultaneously. Therefore, the mobile terminal apparatus 104 can perform processing via the AP 101 and the network 110 while maintaining WFD R2 connection to the MFP 100. That is, for example, it is possible to upload, to a server on the Internet via the AP 101 and the network 110, the scan image received from the MFP 100 via WFD R2. In the example shown in Fig. 1, the mobile terminal apparatus 104 and the MFP 100 are connected to the same AP 101. Otherwise, that is, if the MFP 100 is connected to another AP or is not connected to any AP, this processing can also be performed. Thus, convenience is high. On the other hand, if the mobile terminal apparatus 104 and the MFP 100 are connected by the legacy WFD method, infrastructure connection between the mobile terminal apparatus 104 and the AP 101 is disconnected. Therefore, communication with the MFP 100 is possible, but inconvenience may occur in performing processing from the mobile terminal apparatus 104 via the AP, as described above.

In step S833, the CPU 212 displays, on the display included in the operation display unit 220, a message indicating that connection has failed (connection cannot be established), and returns to step S826 to display again the QR code generated in step S825.

With the above procedure, a communication apparatus having an image forming function, such as an MFP, can display, in a display portion, a two-dimensional code obtained by encoding connection information for connection to an information processing apparatus or a terminal apparatus such as a mobile terminal apparatus in compliance with the legacy WFD standard or the WFD R2 standard. It is possible to extract, from the displayed two-dimensional code, connection information for each of the legacy WFD standard and the WFD R2 standard. An information processing apparatus that reads the two-dimensional code to acquire the connection information can be connected to the communication apparatus using one of the two pieces of connection information. A processing procedure by the information processing apparatus at this time will be described later with reference to Figs. 11A and 11B. Thus, even an information processing apparatus having no resources for connection to the communication apparatus by WFD R2 can be connected in compliance with the legacy standard.

### (Example of Information Included in QR Code)

A character string (a character string extracted from the QR code 1002) obtained when decoding the QR code 1002 displayed in step S826, that is, the connection information encoded when generating the QR code in step S825 will be described. Assume that the character string extracted from the QR code 1002 is, for example, a character string enclosed in double quotes below.
"WFDR2:S:DIRECT-xyAB-CDEFG;T:WPA2;P:0123456789;;WIFI:S:DIRECT-xyAB-CDEFG;T:WPA2;P:0123456789;;"

Each element included in the above character string has the following meaning.
- The first character string of the sentence (a character string before the first ":") indicates the identifier of the sentence
- ";"...a key (one element of the character string) delimiter
- ";;"...the end of one sentence as a unit of the character string
- With respect to one key, a portion before ":" indicates the identifier of the key and a portion after ":" indicates the value of the key

Therefore, in the above character string, two sentences of sentence 1 (or the first character string) and sentence 2 (or the second character string) are described in the order of sentence 1 → sentence 2. Sentences 1 and 2 correspond to the connection information of WFD R2 and the connection information of the legacy WFD method, respectively, and can also be called the first connection information and the second connection information, respectively.
sentence 1 "WFDR2:S:DIRECT-xyAB-CDEFG;T:WPA2;P:0123456789"
sentence 2 "WIFI:S:DIRECT-xyAB-CDEFG;T:WPA2;P:0123456789"

With respect to sentence 1 as the first connection information, it is possible to identify, by the identifier "WFDR2", that sentence 1 concerns WFD R2. Sentence 1 includes a plurality of keys to be described below.
- A key having a key identifier "S" (indicating an SSID) and a value "DIRECT-xyAB-CDEFG" where the SSID can also be regarded as the identification information of the wireless LAN
- A key having a key identifier "T" (indicating an authentication method) and a value "WPA2" where the authentication method can also be regarded as an encryption method
- A key having a key identifier "P" (password) and a value "0123456789" where the password can also be called an encryption key.

Each piece of information indicated by each of the keys is information that is shared in the Bootstrapping processing in S705 when performing WFD connection by the WFD R2 method. This information includes a communication parameter group to be shared before the processing (the GO negotiation processing in S706) with the communication partner in which it is decided which of the MFP 100 and the communication partner is to be a master station (Group Owner). The above information is merely an example, and sentence 1 may include, as a key, information of a passphrase, an encryption method, an encryption key, an authentication method, AKM, or a BSSID (MAC address).

With respect to sentence 2 as the second connection information, it is possible to identify, by the identifier "WIFI", that sentence 2 concerns the legacy WFD method. Sentence 2 includes a plurality of keys to be described below.
- A key having a key identifier "S" (indicating an SSID) and a value "DIRECT-xyAB-CDEFG"
- A key having a key identifier "T" (indicating an authentication method) and a value "WPA2"
- A key having a key identifier "P" (password) and a value "0123456789"

Note that the example in which the key group of sentence 1 and the key group of sentence 2 are the same has been described above, but the present disclosure is not limited to this. In particular, sentence 1 concerning WFD R2 may include another key necessary for WFD R2 connection or may exclude a key unnecessary for WFD R2 connection among the above-described keys. Depending on the device selected in the device selection menu (that is, the information for specifying the OS of the communication partner), different keys may be included or a character string having a different structure may be used. Furthermore, the structure of the above-described character string is merely an example, and the present disclosure is not limited to this.

As described above, the QR code 1002 includes (encodes) such information that a character string obtained by describing sentence 1 including the information concerning WFD R2 and then describing sentence 2 including the information concerning the legacy WFD method is extracted. That is, the character string has such positional relationship that sentence 1 appears before sentence 2. The mobile terminal apparatus 104 that has loaded the QR code normally executes processes indicated by the sentences included in the extracted character string in the order in which the sentences are described. Therefore, the mobile terminal apparatus 104 that has loaded the QR code 1002 attempts first the processing corresponding to sentence 1 and then attempts the processing corresponding to sentence 2. Thus, first, the mobile terminal apparatus 104 attempts WFD connection by WFD R2. If WFD connection succeeds, it is unnecessary to perform connection by the legacy method, and thus the processing indicated by sentence 2 is not executed.

If the mobile terminal apparatus 104 is of a model not supporting WFD R2 or cannot perform WFD connection by the WFD R2 method due to another factor, it executes WFD connection processing by the legacy method in accordance with sentence 2. As described above, the QR code 1002 includes both the pieces of information of the WFD R2 method and the legacy method and stores information for preferentially executing the WFD R2 method. Thus, it is possible to surely perform WFD connection regardless of whether the apparatus (mobile terminal apparatus 104) as a WFD connection partner has connection capability by the WFD R2 method. Furthermore, if the apparatus has connection capability by the WFD R2 method, connection by the WFD R2 method is preferentially performed over the legacy method. In addition, the user performs a simple operation of only loading the QR code 1002 without being conscious of whether the method is the legacy method or the WFD R2 method. As described above, it is possible to more surely perform WFD connection regardless of the capability of the WFD connection partner and preferentially perform connection by the WFD R2 method with higher convenience.

Note that in this example, with respect to WFD R2, generation and display of the QR code in steps S825 and S826 of Fig. 8B correspond to the Bootstrapping processing in S705 of Fig. 7. However, similar to the legacy WFD method, generation and display of the QR code may be processing performed before the connection processing shown in Fig. 7 in order to register the MFP by providing the connection information from the MFP 100 to the mobile terminal apparatus 104. In this case, when performing connection in compliance with the WFD R2 standard, the connection processing shown in Fig. 7 may also be performed in step S830 of Fig. 8B.

### <Modification of Processing Concerning QR Code Display for WFD Connection by MFP 100>

Prior to a description of the connection processing in the mobile terminal apparatus 104, a modification of the processing of providing the connection information using the QR code by the MFP 100, which is shown in Figs. 8A-1 to 8B, will now be described.

In the processing described with reference to Figs. 8A-1 to 8B, an example of displaying the QR code 1002 including both the pieces of information of the WFD R2 method and the legacy method has been explained. However, the present disclosure is not limited to this, and a QR code including the information of the WFD R2 method and a QR code including the information of the legacy method may be switched and displayed.

As a modification of the processing shown in Figs. 8A-1 to 8B, processing of switching between the QR code including the information of the WFD R2 method and the QR code including the information of the legacy method and displaying the QR code will be described with reference to Figs. 9A and 9B.

Processing before processing in step S924 of Fig. 9A is the same as the processing in steps S801 to S823 described with reference to Figs. 8A-1 to 8B. In this modification, after the processing of step S823, the process advances to step S924.

In step S924, the CPU 212 acquires the wireless direct setting information recorded in the nonvolatile memory 215 (information indicating the setting contents set in step S813, S815, or S817) and information of the device type selected in step S821. In this processing, the information for connection by the WFD R2 method is acquired, and information only for connection by the legacy method, which is unnecessary for connection by the WFD R2 method, need not be acquired.

In step S925, the CPU 212 generates a QR code based on the information acquired in step S924. The generated QR code includes the information for connection by the WFD R2 method and includes no information for connection by the legacy WFD method. The information acquired in step S924 is included.

In step S926, the CPU 212 displays the QR code generated in step S925 on the display included in the operation display unit 220. Fig. 10B shows a display example at this time. On the display, the message 1001 for prompting the user to read the QR code and a QR code 1012 are displayed. The QR code 1012 is the QR code generated in step S925. The QR code 1012 includes the information (the connection information for the WFD R2 method) of sentence 1 described above but includes no information (connection information for the legacy WFD method) of sentence 2. That is, by reading and decoding the QR code 1012, a character string including sentence 1 and including no sentence 2 is extracted. If WFD connection cannot be performed even by reading the QR code 1012, a message 1014 for prompting the user to perform an operation of switching the displayed QR code and a switch button 1015 are displayed.

In step S927, the CPU 212 determines whether an operation of selecting the return button 1003 has been performed. If it is determined that the return button 1003 has been selected, the process returns to step S802 to display the home screen; otherwise, the process advances to step S928.

In step S928, the CPU 212 determines whether an operation of selecting the switch button 1015 has been performed. If it is determined that an operation of selecting the switch button 1015 has been performed (switching of the QR code has been instructed), the process advances to step S944; otherwise, the process advances to step S929.

In step S929, the CPU 212 determines whether a connection request by the WFD R2 method has been received from any external apparatus. If it is determined that a connection request by the WFD R2 method has been received, the process advances to step S930; otherwise, the process returns to step S927. Note that processes in steps S930 to S934 will be described by assuming that a connection request has been received from the mobile terminal apparatus 104. The connection request is as described above with reference to Figs. 8A-1 to 8B.

In step S930, the CPU 212 sets the QR code 1012 displayed on the display in the non-display state, and displays a message indicating that the connection processing is in progress.

In step S931, the CPU 212 performs WFD connection processing to the mobile terminal apparatus 104 by the WFD R2 method.

In step S932, the CPU 212 determines whether WFD connection to the mobile terminal apparatus 104 has succeeded. If it is determined that connection has succeeded, the process advances to step S934; otherwise (if connection has failed), the process advances to step S933.

In step S933, the CPU 212 displays, on the display included in the operation display unit 220, a message indicating that connection has failed (connection cannot be established), and the process returns to step S926 to display the QR code generated in step S925. Note that in the error display in step S933, a guide for prompting the user to press the switch button 1015 to switch the QR code may be displayed. After step S933, the process may advance to step S944 without returning to step S926.

Processing in step S934 is the same as that in step S832 of Fig. 8B described above, and display may be performed to notify the user that connection has succeeded.

The correspondence between the connection processing shown in Fig. 7 and steps S925 to S929 is the same as the correspondence between the connection processing shown in Fig. 7 and steps S825 to S828 of Fig. 8B except that step S928 is added in Fig. 9A. That is, in step S929, reception may be determined again with respect to the Bootstrapping request received before step S925.

In step S944, the CPU 212 acquires the wireless direct setting information recorded in the nonvolatile memory 215 (information indicating the setting contents set in step S813, S815, or S817) and information of the device type selected in step S821. In this processing, information only for connection by the WFD R2 method, which is unnecessary for connection by the legacy method, need not be acquired.

In step S945, the CPU 212 generates a QR code based on the information acquired in step S944. The generated QR code includes the information for connection by the legacy method and includes no information for connection by the WFD R2 method.

In step S946, the CPU 212 displays the QR code generated in step S945 on the display included in the operation display unit 220. Fig. 10C shows a display example at this time. On the display, the message 1001 for prompting the user to read the QR code and a QR code 1022 are displayed. The QR code 1022 is the QR code generated in step S945. The QR code 1022 includes the information (the connection information for the legacy WFD method) of sentence 2 described above but includes no information (connection information for the WFD R2 method) of sentence 1. That is, by reading and decoding the QR code 1022, a character string including sentence 2 and including no sentence 1 is extracted.

In step S947, the CPU 212 determines whether an operation of selecting the return button 1003 has been performed. If it is determined that the return button 1003 has been selected, the process returns to step S802 to display the home screen; otherwise, the process advances to step S949.

In step S949, the CPU 212 determines whether a connection request by the legacy WFD method has been received from any external apparatus. If it is determined that a connection request by the legacy method has been received, the process advances to step S950; otherwise, the process returns to step S947. Note that processes in steps S950 to S954 will be described by assuming that a connection request has been received from the mobile terminal apparatus 104. The connection request is as described above with reference to Figs. 8A-1 to 8B.

In step S950, the CPU 212 sets the QR code 1022 displayed on the display in the non-display state, and displays a message indicating that the connection processing is in progress.

In step S951, the CPU 212 performs WFD connection processing to the mobile terminal apparatus 104 by the legacy method.

The processes in steps S952 to S954 are the same as those in steps S831 to S833 of Fig. 8B described above.

As described above, even by switching between the QR code including the information for connection by the WFD R2 method and the QR code including the information for connection by the legacy method and displaying the QR code, it is possible to more surely establish WFD connection regardless of the capability of the WFD connection partner. Since, as the order of switching display, the QR code of the information of the WFD R2 method is displayed before the QR code of the information of the legacy method, it is possible to preferentially perform connection by the WFD R2 method with higher convenience. Furthermore, the user need not be conscious of whether the method is the legacy method or the WFD R2 method.

In the method shown in Figs. 9A and 9B, in a case where the apparatus supports only the legacy method, due to the labor of reading the QR code twice and the labor of operating the switch button 1015, the apparatus has lower operability than in the method shown in Figs. 8A-1 to 8B but a data capacity included in one QR code can be made small. If a data amount included in a QR code is large, the number of cells of the QR code is large and thus the QR code can be displayed correctly only on a higher-resolution display or readability on the reading side may lower. To the contrary, if a data amount included in a QR code is small, it is possible to suppress an increase in number of cells of the QR code and correctly display the QR code even on a low-resolution display or improve readability on the reading side.

Note that the QR code 1012 shown in Fig. 10B may include information of a character string obtained by adding, to sentence 1, a comment (guide message) of "the WFD R2 method is not supported" by the mobile terminal apparatus 104 in a case where the mobile terminal apparatus 104 cannot perform the processing indicated by sentence 1. Alternatively, information may be included so that the comment is "Connection by the displayed QR code is not supported. Please read the corresponding QR code". Thus, it is possible to prompt the user who has read the QR code 1012 by the terminal not supporting the WFD R2 method to press the switch button 1015 to switch to display of the QR code 1022. The guide message need not be fixed and may be settable. Furthermore, based on a flag at the time of receiving the Bootstrapping Request in S703, it can be determined that parameter exchange by the QR code of the WFD R2 method is not supported. If it is so determined, the comment may be embedded in the QR code 1012. If the Service Discovery frame of the WFD R2 method in S701 has not been received, it is considered that there is no WFD R2-enabled mobile terminal, and the comment may be embedded in the QR code 1012.

As shown in Fig. 10D, the QR code 1012 including the information for the WFD R2 method and the QR code 1022 including the information for the legacy method may be displayed side by side so as to be shot at once without being switched. At this time, assume that the arrangement order of the two QR codes is such arrangement order that the terminal that has read the two QR codes at once preferentially processes the QR code 1012 including the information for the WFD R2 method (the QR code 1012 is arranged on the left side when the QR codes are arranged horizontally and is arranged on the upper side when the QR codes are arranged vertically). A message 1041 for prompting the user to read both the two QR codes is displayed. Note that instead of the message 1041, a message for prompting the user to read first the QR code 1012 including the information for the WFD R2 method, such as a message "please read the QR codes from the left QR code", may be displayed.

Note that in a case where the QR code including the connection information corresponding to the legacy WFD method and the QR code including the connection information corresponding to the WFD R2 method are displayed side by side, as shown in Fig. 10D, the display procedure may be a procedure complying with Figs. 8A-1 to 8B. In this case, the plurality (in this case, two) of QR codes respectively corresponding to the methods are generated in step S825, as shown in Fig. 10D, and are displayed in step S826.

Note that in this example as well, generation and display of the QR code corresponding to the WFD R2 method in steps S925 and S926 of Fig. 9A may be processing performed before the connection processing shown in Fig. 7 in order to register the MFP by providing the connection information from the MFP 100 to the mobile terminal apparatus 104. In this case, when performing connection in compliance with the WFD R2 standard, the connection processing shown in Fig. 7 may also be performed in step S931 of Fig. 9A.

### <Processing of Print Application in Mobile Terminal Apparatus 104>

Figs. 11A and 11B are flowcharts illustrating processing of print application software (to be simply referred to as a print application hereinafter) in the mobile terminal apparatus 104. This processing is processing of reading a QR code displayed on the MFP 100 by shooting it by the camera of the mobile terminal apparatus 104 and establishing WFD connection between the mobile terminal apparatus 104 and the MFP 100 based on the information extracted by reading the QR code. This print application may correspond to any of the MFP 100 that executes the processing shown in Figs. 8A-1 to 8B and the MFP 100 that executes the processing according to the modification shown in Figs. 9A and 9B.

The processing shown in Figs. 11A and 11B is executed by the mobile terminal apparatus 104. More specifically, the processing shown in Figs. 11A and 11B is implemented by deploying the program of the print application recorded in the nonvolatile memory 422 to the RAM 414 and executing the program by the CPU 412. When activation of the print application is instructed in the mobile terminal apparatus 104, the processing shown in Figs. 11A and 11B is started.

In step S1101, the CPU 412 displays the home screen of the print application on the display unit 420. The print application is an application for controlling a printer such as the MFP 100, and can send a print instruction to the printer (transmit a print job) and send a scan instruction (transmit a scan job). On the home screen of the print application, information of a printer registered in the print application (in a case where the MFP 100 is registered, the state information of the MFP 100) is displayed. In addition, on the home screen of the print application, "document print", "photo print", "scan", "cloud" (an instruction item of processing using a cloud service), and the like are displayed as menu items for instructions to the printer. On the home screen of the print application, a display item for registering a printer in the print application is displayed.

In step S1102, the CPU 412 determines whether an operation of newly registering a printer has been performed by operating the display item for registering a printer. If it is determined that an operation of registering a printer has been performed, the process advances to step S1103; otherwise, the process advances to step S1120.

In step S1103, the CPU 412 determines whether an operation of selecting registration by a QR code as a new printer registration method (an operation method when performing connection to a new printer by wireless communication) has been performed. If registration by a QR code has been selected, the process advances to step S1105; otherwise, the process advances to step S1104.

In step S1104, the CPU 412 performs connection to the new printer by a method other than the method using a QR code, and registers the printer. For example, the CPU 412 performs connection to a printer found by multicasting a printer search request within a network, and registers the printer.

In step S1105, the CPU 412 activates the camera unit 421 and starts shooting (live view shooting) for reading a QR code by the camera unit 421.

In step S1106, the CPU 412 determines whether a QR code has been detected (a QR code has been read) from an image shot by the camera unit 421. If a QR code has been detected, the process advances to step S1108; otherwise, the process advances to step S1107. The read QR code may be the QR code displayed by the MFP 100 by the procedure shown in Figs. 8A-1 tof 8B or Figs. 9A and 9B.

In step S1107, the CPU 412 determines whether an operation of canceling shooting for reading the QR code by the camera unit 421 has been performed. If a cancellation operation has been performed, the CPU 412 ends shooting by the camera unit 421, and the process returns to step S1101 to display the home screen of the print application.

In step S1108, the CPU 412 extracts a character string by decoding the QR code detected in step S1106. Then, the CPU 412 determines whether the character string as the extracted extraction information includes a sentence (that is, sentence 1) corresponding to the WFD R2 method. If it is determined that a sentence corresponding to the WFD R2 method is included, the process advances to step S1109; otherwise, the process advances to step S1111. As described above, if there exists a sentence in which the identifier "WFDR2" of the sentence is described, it is determined that a sentence corresponding to the WFD R2 method is included.

In step S1109, the CPU 412 instructs the Operating System (OS) operating on the mobile terminal apparatus 104 to perform WFD connection by the WFD R2 method in accordance with the sentence (sentence 1) corresponding to the WFD R2 method, the presence of which has been determined in step S1108. More specifically, the CPU 412 requests the OS to perform WFD connection by the WFD R2 method while notifying the OS of the value of each key extracted from the sentence corresponding to the WFD R2 method. In accordance with the request, the OS performs, in compliance with WFD R2, the connection processing shown in Fig. 7 to the communication partner (MFP 100) having the identifier (SSID) included in the notified keys.

Note that at this time, as an MFP connectable by the WFD R2 method, the MFP that displays the QR code detected in step S1106 may be registered in the mobile terminal apparatus 104. The registered information includes the connection information acquired from the QR code and the name assigned to the target MFP. With respect to the registered MFP, a corresponding icon and the like may be created, and the icon may be displayed, on an initial screen displayed at the time of activation of the print application, to be selectable as an MFP connectable by the WFD R2 method. The registration timing may be a timing when connection succeeds instead of the start of the connection processing.

In step S1110, the CPU 412 determines whether WFD connection by the WFD R2 method has succeeded. If a connection success notification is received from the OS, it is determined that connection has succeeded. If connection has succeeded, the process advances to step S1114; otherwise (a failure notification is received or the requested processing is not performed because the mobile terminal apparatus 104 does not support connection by the WFD R2 method), the process advances to step S1111.

In step S1111, the CPU 412 determines whether the character string extracted by decoding the QR code detected in step S1106 includes a sentence (that is, sentence 2) corresponding to the legacy method. If it is determined that a sentence corresponding to the legacy method is included, the process advances to step S1112; otherwise, the process advances to step S1115. As described above, if there exists a sentence in which the identifier "WIFI" of the sentence is described, it is determined that a sentence corresponding to the legacy method is included.

In step S1112, the CPU 412 instructs the Operating System (OS) operating on the mobile terminal apparatus 104 to perform WFD connection by the legacy method in accordance with the sentence (sentence 2) corresponding to the legacy method, the presence of which has been determined in step S1111. More specifically, the CPU 412 requests the OS to perform WFD connection by the legacy method while notifying the OS of the value of each key extracted from the sentence corresponding to the legacy method. In accordance with the request, the OS performs Wi-Fi connection processing to the communication partner (MFP 100) having the identifier (SSID) included in the notified keys.

Note that at this time, as an MFP connectable by the legacy WFD method, the MFP that displays the QR code detected in step S1106 may be registered in the mobile terminal apparatus 104. The registered information includes the connection information acquired from the QR code and the name assigned to the target MFP. With respect to the registered MFP, a corresponding icon and the like may be created, and the icon may be displayed, on the initial screen displayed at the time of activation of the print application, to be selectable as an MFP connectable by the legacy WFD method. The registration timing may be a timing when connection succeeds instead of the start of the connection processing.

In step S1113, the CPU 412 determines whether WFD connection by the legacy method has succeeded. If a connection success notification is received from the OS, it is determined that connection has succeeded. If connection has succeeded, the process advances to step S1114; otherwise (a failure notification is received), the process advances to step S1115.

In step S1114, the CPU 412 displays, on the display unit 420, a message indicating that connection to the new printer has succeeded and a message indicating that the new printer can be registered, and the process returns to step S1101.

In step S1115, the CPU 412 performs, on the display unit 420, error display to indicate that connection to the printer has failed, the new printer cannot be registered, or information of the printer as the connection destination cannot be obtained from the QR code. After that, the process returns to step S1101.

Note that the processes in steps S1105 to S1115 have been explained as processes performed when an instruction to register a new printer is sent. The processes may be performed when execution of the direct connection function to the printer, which is a function used when temporarily performing P2P connection to the printer, is instructed.

In step S1120, the CPU 412 determines whether other processing has been instructed. If the other processing has been instructed, the process advances to step S1121; otherwise, the process advances to step S1122.

In step S1121, the CPU 412 performs processing corresponding to the instruction of the other processing. With this processing, a print instruction to the registered printer (transmission of a print job) and a scan instruction (transmission of a scan instruction) are performed.

In step S1122, the CPU 412 determines whether an instruction to end the print application is sent. If an end instruction is sent, the CPU 412 closes the print application and ends the processing shown in Figs. 11A and 11B. If no end instruction is sent, the process returns to step S1102 to repeat the processes.

In the processing shown in Figs. 11A and 11B, for the whole character string extracted from the detected QR code, the determination processing in step S1111 is performed after the determination processing in step S1108. Thus, in a case where the character string extracted from the QR code includes both sentences 1 and 2 described above, it is possible to preferentially perform connection by the WFD R2 method over connection by the legacy method regardless of the context of sentences 1 and 2. That is, in the above-described example, even if sentence 2 is described before sentence 1, it is possible to preferentially perform connection by the WFD R2 method over connection by the legacy method. Furthermore, if the mobile terminal apparatus 104 supports the WFD R2 method, it is possible to perform WFD connection by the WFD R2 method, and if the mobile terminal apparatus 104 does not support the WFD R2 method, it is possible to perform WFD connection by the legacy method. That is, it is possible to perform WFD connection more surely regardless of whether the mobile terminal apparatus 104 supports the WFD R2 method. Furthermore, the user need not be conscious of whether the mobile terminal apparatus 104 supports connection by the WFD R2 method.

Furthermore, if the two QR codes are shot at once by shooting the screen shown in Fig. 10D, after the determination processing in step S1108, the determination processing in step S1111 is performed for both the character strings extracted from the two QR codes. Thus, if a plurality of QR codes are detected, it is possible to preferentially perform connection by the WFD R2 method over connection by the legacy method regardless of the positional relationship between the plurality of QR codes. That is, for example, even if the QR code 1022 is arranged on the left side and the QR code 1012 is arranged on the right side in Fig. 10D, it is possible to preferentially perform connection by the WFD R2 method over connection by the legacy method.

### <Processing of General-Purpose QR Code Reader in Mobile Terminal Apparatus 104>

Figs. 12A and 12B are flowcharts illustrating processing of the application software (to be referred to as a QR code reader hereinafter) of a general-purpose QR code reader in the mobile terminal apparatus 104. This processing may be executed by a dedicated application for reading a QR code or a camera application having a function of reading a QR code. This processing is processing of reading a QR code displayed on the MFP 100 by shooting it by the camera of the mobile terminal apparatus 104 and establishing WFD connection between the mobile terminal apparatus 104 and the MFP 100 based on information extracted by reading the QR code. The processing shown in Figs. 12A and 12B is implemented by deploying the program of the QR code reader recorded in the nonvolatile memory 422 to the RAM 414 and executing the program by the CPU 412. When activation of the QR code reader is instructed in the mobile terminal apparatus 104, the processing shown in Figs. 12A and 12B is started.

In step S1201, the CPU 412 activates the QR code reader and the camera unit 421 and starts live view shooting by the camera unit 421.

In step S1201, the CPU 412 determines whether a QR code has been detected (a QR code has been read) from an image shot by the camera unit 421. If a QR code has been detected, the process advances to step S1204; otherwise, the process advances to step S1203.

In step S1203, the CPU 412 determines whether an instruction to end the QR code reader has been received. If an end instruction has been received, the QR code reader is closed, and the processing shown in Figs. 12A and 12B ends. If no end instruction has been received, the process returns to step S1202 to repeat the processing.

In step S1204, the CPU 412 decodes the QR code detected in step S1202 to extract a character string. Then, the CPU 412 assigns serial numbers to one or more sentences included in the extracted character string.

In step S1205, the CPU 412 initializes, to 1, a counter N held in the RAM 414. The counter N represents a number assigned to a sentence of interest.

In step S1206, the CPU 412 determines whether the sentence having a serial number of N (the Nth sentence) among the sentences extracted in step S1204 is a discriminable (readable) sentence. If the sentence is a discriminable sentence, the process advances to step S1210; otherwise, the process advances to step S1220.

In step S1210, the CPU 412 determines whether the Nth sentence is a sentence corresponding to the WFD R2 method. If it is determined that the Nth sentence is a sentence corresponding to the WFD R2 method, the process advances to step S1211; otherwise, the process advances to step S1213. As described above, if the sentence is a sentence in which the sentence identifier "WFDR2" is described, it is determined that the sentence is a sentence corresponding to the WFD R2 method.

In step S1211, the CPU 412 instructs the Operating System (OS) operating on the mobile terminal apparatus 104 to perform WFD connection by the WFD R2 method in accordance with the Nth sentence. This processing is the same processing as that in step S1109 described above.

In step S1212, similar to step S1110 described above, the CPU 412 determines whether WFD connection by the WFD R2 method has succeeded. If connection has succeeded, the process advances to step S1217; otherwise, the process advances to step S1216.

In step S1213, the CPU 412 determines whether the Nth sentence is a sentence corresponding to the legacy method. If it is determined that the sentence is a sentence corresponding to the legacy method, the process advances to step S1214; otherwise, the process advances to step S1218. As described above, if there exists a sentence in which the sentence identifier "WIFI" is described, it is determined that there exists a sentence corresponding to the legacy method.

In step S1214, the CPU 412 instructs the Operating System (OS) operating on the mobile terminal apparatus 104 to perform WFD connection by the legacy method in accordance with the Nth sentence. This processing is the same processing as that in step S1112 described above.

In step S1215, similar to step S1113 described above, the CPU 412 determines whether WFD connection by the legacy method has succeeded. If connection has succeeded, the process advances to step S1217; otherwise (a failure notification is received), the process advances to step S1216.

In step S1217, the CPU 412 displays, on the display unit 420, a message indicating that connection to the communication partner by Wi-Fi (wireless LAN) has succeeded. In step S1218, the CPU 412 performs, on the display unit 420, error display to indicate that connection to the communication partner by Wi-Fi (wireless LAN) has failed or information of the communication partner as the connection destination cannot be obtained from the QR code.

In step S1218, other processing is performed in accordance with the Nth sentence. For example, if the Nth sentence is information indicating a URL, the URL is displayed in a link form. If the URL displayed in the link form is touched, access is made to the displayed URL.

In step S1220, the CPU 412 determines whether the counter N is the maximum value of the serial numbers assigned in step S1204, that is, whether all the sentences extracted in step S1204 have been checked. If N is the maximum value, the process returns to step S1202; otherwise, N is incremented by one in step S1221, and the process returns to step S1206. That is, the determination processing from step S1206 is performed for the next sentence among the plurality of sentences included in the extracted character string.

Even if the QR code is read by the general-purpose QR code reader, as described with reference to Figs. 12A and 12B, if the display of the QR code described with reference to each of Figs. 10A to 10D is read, connection is performed by the method supported by the mobile terminal apparatus 104. In this example, connection by the method supported by the mobile terminal apparatus 104 is one of WFD connection by the WFD R2 method and WFD connection by the legacy method. Then, in a case where the QR code is displayed, as described with reference to each of Figs. 10A to 10D, even in the general-purpose processing shown in Figs. 12A and 12B, connection by the WFD R2 method is preferentially performed over connection by the legacy method.

According to the above-described embodiment, it is possible to more preferably use the plurality of Wi-Fi Direct standards.

### <Another Modification>

Instead of the QR code 1002 generated in step S825 and displayed in step S826 in Fig. 8B, a character string including sentences 1 and 2 as character strings obtained by decoding a QR code, for example, a character string formed by alphabetic characters, numbers, and symbols [SM1] may be generated as a display target, and displayed. In this case, the mobile terminal apparatus 104 can perform character recognition for the shot character string, thereby extracting both the first connection information indicated by sentence 1 and the second connection information indicated by sentence 2. In recent years, since the high pixel density of the display device enables display of high-quality characters, and the accuracy of character recognition processing is high through the use of machine learning, an error caused by erroneous recognition is suppressed, and it is possible to replace a two-dimensional code by a character string.

The same applies to other steps of displaying the QR code, for example, steps S925 and S926 and steps S945 and S946. With this configuration, the whole system operates in the same manner as described in the above embodiment and modification, thereby obtaining the effect. Furthermore, with this configuration, it becomes unnecessary to use the two-dimensional code. For example, even if the use conditions of the two-dimensional code and the like are changed, this no longer affects the system. Furthermore, the user can read a display target displayed on the operation display unit 220 of the MFP 100.

Note that various control operations described above that are performed by the CPU 212 may be performed by one hardware component, or control of the overall apparatus may be performed by sharing processing between a plurality of hardware components (for example, a plurality of processors or circuits).

Although the present disclosure has been described in detail based on its preferable embodiments, the present disclosure is not limited to these specific embodiments, and also includes various forms without departing from the spirit and scope of the disclosure. Furthermore, the above-described embodiments are merely embodiments of the present disclosure, and can be combined appropriately.

In the above-described embodiments, an example in which the present disclosure is applied to the MFP has been described. However, the present disclosure is not limited to this example, and is applicable to any wireless apparatus that can perform P2P (WLAN) communication based on WFD. That is, the present disclosure is applicable to a personal computer, a PDA, a tablet terminal, a mobile phone terminal such as a smartphone, a music player, a game device, an electronic book reader, a smartwatch, and various measurement devices (sensor devices) such as a thermometer and a hygrometer. The present disclosure is applicable to digital cameras (including a still camera, a video camera, a network camera, and a security camera), a printer, a scanner, and a drone. The present disclosure is applicable to a video output device, an audio output device (for example, a smart speaker), a media streaming player, and a wireless LAN slave device (adaptor) capable of performing connection to a USB terminal or a LAN cable terminal. The video output device includes, for example, a device such as a set-top box, and acquires (downloads) a movie/still image on the Internet specified by a URL instructed from an electronic apparatus and outputs it to the display device connected via a video output terminal such as HDMI^{®}. This implements streaming playback on the display device, and mirroring display (display in which contents displayed on the electronic apparatus are also displayed on the display device). The video output device also includes media players such as a television, a hard disk recorder, a Blu-ray recorder, and a DVD recorder, a head-mounted display, a projector, a television, a display device (monitor), and a signage device. The present disclosure is applicable to even Wi-Fi connectable devices called smart home appliances such as an air conditioner, a refrigerator, a washing machine, a cleaner, an oven, a microwave oven, lighting equipment, a heating appliance, and cooling equipment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (100) comprising:
communication means (226) for performing direct communication complying with a Wi-Fi Direct standard with an external apparatus without intervention of an access point; and
display control means (212) for controlling to display, so as to be shot at once, a display target from which both first connection information and second connection information can be extracted,
wherein the first connection information is connection information for performing connection of the direct communication to the communication apparatus by a first method, includes an SSID and a password of the communication apparatus, and is included in a first key group assigned with a first identifier, and
the second connection information is connection information for performing connection of the direct communication to the communication apparatus by a second method different from the first method, and is included in a second key group assigned with a second identifier.

2. The apparatus according to claim 1, wherein
the display target is one two-dimensional code from which both the first connection information and the second connection information can be extracted.

3. The apparatus according to claim 2, wherein
the two-dimensional code is displayed so that a character string extracted from the two-dimensional code has such positional relationship that the second connection information appears before the first connection information.

4. The apparatus according to any one of claims 1 to 3, wherein
the display target is a screen including both a first two-dimensional code from which the first connection information can be extracted and a second two-dimensional code from which the second connection information can be extracted.

5. The apparatus according to claim 4, wherein
on the screen, the second two-dimensional code is arranged on a left side or an upper side of the first two-dimensional code.

6. The apparatus according to any one of claims 1 to 5, wherein
the display target is a character string from which both the first connection information and the second connection information can be extracted.

7. The apparatus according to any one of claims 1 to 6, wherein
the second connection information includes at least one of a communication parameter, an encryption key, and AKM to be shared before processing with a communication partner in which it is decided which of the communication apparatus and the communication partner is to be a master station when performing the direct communication by the second method.

8. The apparatus according to any one of claims 1 to 7, wherein
the communication apparatus is a printer.

9. A communication apparatus (100) comprising:
communication means (226) for performing direct communication complying with a Wi-Fi Direct standard with an external apparatus without intervention of an access point; and
display control means (212) for controlling to display a first display target from which first connection information that is connection information for performing connection of the direct communication to the communication apparatus by a first method and includes an SSID and a password of the communication apparatus can be extracted and a second display target from which second connection information that includes connection information for performing connection of the direct communication to the communication apparatus by a second method different from the first method can be extracted, and for controlling to display the first display target after displaying the second display target.

10. The apparatus according to claim 9, wherein
a display item for accepting an instruction to switch display is displayed together with the second display target, and it is switched to display the first display target instead of the second display target based on an operation of the display item.

11. The apparatus according to claim 9 or 10, wherein
the first display target and the second display target are two-dimensional codes different from each other.

12. The apparatus according to any one of claims 9 to 11, wherein
the second connection information includes at least one of a communication parameter, an encryption key, and AKM to be shared before processing with a communication partner in which it is decided which of the communication apparatus and the communication partner is to be a master station when performing the direct communication by the second method.

13. The apparatus according to any one of claims 9 to 12, wherein
the communication apparatus is a printer.

14. An information processing apparatus (104) comprising:
communication means (429) for performing direct communication complying with a Wi-Fi Direct standard with an external apparatus without intervention of an access point;
an image sensor (421);
extraction means for extracting extraction information from a target detected from an image shot by the image sensor; and
control means for controlling, in a case where the extraction information includes both first connection information and second connection information, to perform, based on the second connection information, connection to the communication apparatus indicated by the second connection information,
wherein the first connection information is connection information for performing connection of the direct communication to a communication apparatus by a first method, includes an SSID and a password of the communication apparatus, and is included in a first key group assigned with a first identifier, and
the second connection information is connection information for performing connection of the direct communication by a second method different from the first method, and is included in a second key group assigned with a second identifier.

15. The apparatus according to claim 14, wherein
in a case where the extraction information includes not the second connection information but the first connection information, connection based on the first connection information is performed, and
in a case where both the first connection information and the second connection information are included and connection based on the second connection information succeeds, connection based on the first connection information is not performed.

16. The apparatus according to claim 15, wherein
in a case where both the first connection information and the second connection information are included and connection based on the second connection information fails, connection based on the first connection information is performed.

17. The apparatus according to any one of claims 14 to 16, wherein
the target is a two-dimensional code.

18. The apparatus according to any one of claims 14 to 17, wherein
the second connection information includes at least one of a communication parameter, an encryption key, and AKM to be shared before processing with a communication partner in which it is decided which of the information processing apparatus and the communication partner is to be a master station when performing the direct communication by the second method.

19. The apparatus according to any one of claims 14 to 18, wherein
the communication apparatus is a printer.

20. A system comprising a communication apparatus and an information processing apparatus,
the communication apparatus including
communication means for performing direct communication complying with a Wi-Fi Direct standard with an external apparatus without intervention of an access point, and
display control means for controlling to display, so as to be shot at once, a display target from which both first connection information and second connection information can be extracted,
wherein the first connection information is connection information for performing connection of the direct communication to the communication apparatus by a first method, includes an SSID and a password of the communication apparatus, and is included in a first key group assigned with a first identifier, and
the second connection information is connection information for performing connection of the direct communication to the communication apparatus by a second method different from the first method, and is included in a second key group assigned with a second identifier, and
the information processing apparatus including
communication means for performing direct communication complying with a Wi-Fi Direct standard with an external apparatus without intervention of an access point,
an image sensor, and
extraction means for extracting extraction information from a target detected from an image shot by the image sensor; and
control means for controlling, in a case where the extraction information includes both first connection information that is connection information for performing connection of the direct communication to a communication apparatus by a first method and includes an SSID and a password of the communication apparatus and second connection information that includes information for performing connection of the direct communication by a second method different from the first method, to perform, based on the second connection information, connection to the communication apparatus indicated by the second connection information.

21. A control method for a communication apparatus including communication means for performing direct communication complying with a Wi-Fi Direct standard with an external apparatus without intervention of an access point, and display control means, the method comprising:
by the display control means, controlling to display, so as to be shot at once, a display target from which both first connection information and second connection information can be extracted,
wherein the first connection information is connection information for performing connection of the direct communication to the communication apparatus by a first method, includes an SSID and a password of the communication apparatus, and is included in a first key group assigned with a first identifier, and
the second connection information is connection information for performing connection of the direct communication to the communication apparatus by a second method different from the first method, and is included in a second key group assigned with a second identifier.

22. A control method for a communication apparatus including communication means for performing direct communication complying with a Wi-Fi Direct standard with an external apparatus without intervention of an access point, and display control means, the method comprising:
by the display control means, controlling to display a first display target from which first connection information that is connection information for performing connection of the direct communication to the communication apparatus by a first method and includes an SSID and a password of the communication apparatus can be extracted and a second display target from which second connection information that includes connection information for performing connection of the direct communication to the communication apparatus by a second method different from the first method can be extracted, and controlling to display the first display target after displaying the second display target.

23. A control method for an information processing apparatus including communication means for performing direct communication complying with a Wi-Fi Direct standard with an external apparatus without intervention of an access point, an image sensor, extraction means, and control means, the method comprising:
by the extraction means, extracting extraction information from a target detected from an image shot by the image sensor; and
by the control means, controlling, in a case where the extraction information includes both first connection information and second connection information, to perform, based on the second connection information, connection to the communication apparatus indicated by the second connection information,
wherein the first connection information is connection information for performing connection of the direct communication to a communication apparatus by a first method, includes an SSID and a password of the communication apparatus, and is included in a first key group assigned with a first identifier, and
the second connection information is connection information for performing connection of the direct communication by a second method different from the first method, and is included in a second key group assigned with a second identifier.

24. A control method for a system including a communication apparatus that includes communication means for performing direct communication complying with a Wi-Fi Direct standard with an external apparatus without intervention of an access point and display control means, and an information processing apparatus that includes communication means for performing direct communication complying with a Wi-Fi Direct standard with an external apparatus without intervention of an access point, an image sensor, extraction means, and control means, the method comprising:
by the display control means of the communication apparatus, controlling to display, so as to be shot at once, a display target from which both first connection information and second connection information can be extracted,
wherein the first connection information is connection information for performing connection of the direct communication to the communication apparatus by a first method, includes an SSID and a password of the communication apparatus, and is included in a first key group assigned with a first identifier, and
the second connection information is connection information for performing connection of the direct communication to the communication apparatus by a second method different from the first method, and is included in a second key group assigned with a second identifier;
by the extraction means of the information processing apparatus, extracting extraction information from a target detected from an image shot by the image sensor; and
by the control means, controlling, in a case where the extraction information includes both first connection information that is connection information for performing connection of the direct communication by a first method and includes an SSID and a password of the communication apparatus, and second connection information that includes information for performing connection of the direct communication by a second method different from the first method, to perform, based on the second connection information, connection to the communication apparatus indicated by the second connection information.
